# EUROPÄISCHE PATENTSCHRIFT

(11) **EP 4 067 271 B1**
(45) Veröffentlichungstag und Bekanntmachung des Hinweises auf die Patenterteilung: **12.06.2024**
(21) Anmeldenummer: 21217046.8
(22) Anmeldetag: 22.12.2021
(51) Int. Cl.: B65G 47/90, B65G 57/24, B65G 61/00

(54) **GREIFER UND VERFAHREN ZUM UMGANG MIT STÜCKGÜTERN**
GRIPPER AND METHOD FOR HANDLING PIECE GOODS
PRÉHENSEUR ET PROCÉDÉ DE MANIPULATION DES MARCHANDISES EN DÉTAIL

(30) Priorität: 01.04.2021 DE 102021108435
(43) Veröffentlichungstag der Anmeldung: 05.10.2022
(73) Patentinhaber: Krones Aktiengesellschaft, 93073 Neutraubling (DE)
(72) Erfinder: KOLLMUSS, Manuel, 93073 Neutraubling (DE)
(74) Vertreter: Benninger, Johannes

(56) Entgegenhaltungen:
- WO-A1-2006/098556
- CN-B- 103 042 534
- DE-A1- 2 632 174
- DE-A1- 3 409 108
- DE-A1- 3 604 985
- DE-A1- 10 219 129
- DE-A1-102013 113 754
- DE-B- 1 120 967
- GB-A- 870 866
- IT-A1- VI20 120 084

## Beschreibung

Die vorliegende Erfindung betrifft einen Greifer und ein Verfahren zum Umgang mit Stückgütern.

Um Stückgüter im Bereich der Pack- und Palettiertechnik in eine relative Anordnung bringen zu können, die sich zum Bilden einer palettierfähigen Lage eignet, sind aus dem Stand der Technik bereits Greifer bekannt, welche über mehrere zum klemmenden Erfassen von Stückgütern vorgesehene Leisten verfügen. Diese Leisten bzw. Klemmleisten können bei bereits bekannten Greifern eine Zustellbewegung ausführen, wodurch Stückgüter zwischen den Leisten kraftbeaufschlagt gehalten werden und der Greifer sodann die gehaltenen Stückgüter drehen und/oder gegenüber weiteren Stückgütern verschieben kann. Nach einem Drehen und/oder Verschieben können die Leisten geöffnet werden bzw. ihren relativen Abstand zueinander vergrößern, wodurch die bis dahin klemmend gehaltenen Stückgüter wieder freigegeben werden.

Bei den Stückgütern kann es sich beispielsweise um Gebinde mit mehreren Getränkebehältern handeln, so dass ein entsprechender Greifer solche Gebinde entgegennehmen und hierauf bedarfsweise drehen bzw. verschieben kann. Bekannt sind beispielsweise Gebinde, bei welchen mehrere Getränkebehälter mittels einer Umreifung und/oder einer Banderole zusammengehalten werden. Darüber hinaus existieren Gebinde, bei welchen Artikel über ein sogenanntes Tray zusammengehalten werden, auf welchem mehrere Getränkebehälter aufstehen und welches Tray seitliche Laschen besitzt, die in eine aufrechte Orientierung überführt wurden. Auch sind seit einiger Zeit Gebinde bekannt, bei welchen Getränkebehälter über einen flächigen Verpackungszuschnitt zusammengehalten werden, der in Richtung von oben kommend auf die jeweiligen Getränkebehälter aufgesteckt wurde. Solche in der Praxis als Top-Clips bezeichneten Verpackungszuschnitte können aus Karton und/oder Pappe gebildet sein.

Ein beschriebener Greifer, welcher Stückgüter entgegennimmt und sodann manipuliert, kann an einem Portalsystem aufgehängt oder als Bestandteil eines Portalsystems ausgebildet sein. Unterhalb des Portalsystems kann sich eine Horizontalfördereinrichtung befinden, welche Stückgüter bzw. Gebinde in mehreren parallelen Reihen transportiert. Ein solcher Transport in mehreren parallelen hat den Vorteil, dass Stückgüter bzw. Gebinde mit hohem Durchsatz transportiert und mittels eines Greifers manipuliert werden können. Auch sind bereits Ausführungsformen bekannt, bei welchen Greifer zur Manipulation von Stückgütern bzw. Gebinden an Mehrachsroboterarmen angeordnet sind bzw. von Mehrachsrobotern getragen werden.

Eine solche Greifvorrichtung ist beispielsweise aus der EP 2 388 216 A1 bekannt. Die in der EP-Patentanmeldung offenbarte Greifvorrichtung besitzt zwei sich gegenüberliegende Greifmittel, die zum Entgegennehmen von Stückgütern zugestellt werden können. Setzt die Greifvorrichtung ungewollt auf eine Bodenfläche auf, so können sich die zwei gegenüberliegenden Greifmittel von einem Träger lösen, womit Beschädigungen der Greifvorrichtung entgegengewirkt werden kann.

Eine weitere solche Greifvorrichtung ist beispielsweise aus der DE 102 04 513 A1 bekannt. Die in der DE-Anmeldung offenbarte Greifvorrichtung umfasst zwei Greifarme zum Greifen von Gegenständen. Einer der beiden Greifarme ist mit einem Fahrzeug verbindbar. Der weitere Greifarm dient zum Öffnen und Schließen der Greifvorrichtung über ein Stellglied.

Aus der DE 11 20 967 B ist eine Vorrichtung zum Stapeln noch zu härtender, von einer Formmaschine kommender Formlinge von Steinen bekannt. Zwei Greifbaken werden bei der Vorrichtung jeweils durch einen zweiteiligen Körper gebildet. Die beiden Teile der Körper sind an einem Drehpunkt aufgehängt. Diese Druckschrift offenbart den Oberbegriff des Anspruchs 1.

Die DE 36 04 985 A1 offenbart einen Steinstapelgreifer, der ein zentrales Tragstück aufweist und Greifarme besitzt. Zwischen den Greifarmen sind weitere Arme vorgesehen, die mit Anpressschienen verschweißt sind. Die Anpressschienen bestehen aus Winkelprofilen.

Die DE 26 32 174 A1 betrifft eine Vorrichtung zum Greifen von auf Lücke gepressten Steinformlingen. Die Vorrichtung besteht aus einer Greifertraverse mit Betätigungsvorrichtungen für an der Greifertraverse gegeneinander verfahrbare Greiferwangen. Mittig zwischen den beiden Greiferwangen sind gegen die Greiferwangen aufspreizbare Gegenwangen angeordnet. Die Gegenwangen sind an einer gemeinsamen Schwenkachse angelenkt und im nicht aufgespreizten Zustand mittels sie verbindender Zugfedern gegeneinander geschwenkt.

Die EP 3 431 422 A1 offenbart zudem eine zum Entgegennehmen von Stückgütern vorgesehene Klemm- und/oder Greifeinrichtung für einen Manipulator. Die

Klemm- und/oder Greifeinrichtung umfasst mehrere jeweils hängend angeordnete Klemm- und/oder Greifelemente, welche zum temporären Entgegennehmen von Stückgütern aus unterschiedlichen parallelen Reihen ausgebildet sind. Die Klemm- und/oder Greifelemente können hierbei paarweise zugestellt werden, um Stückgüter einer jeweiligen Reihe mittels eines jeweiligen Paares an Klemm- und/oder Greifelementen temporär zu erfassen.

Eine Klemm- und/oder Greifeinrichtung, wie sie in der EP 3 431 422 A1 beschrieben ist, erfordert eine umständliche Mechanik, um zeitgleich Stückgüter aus mehreren parallelen Reihen entgegennehmen zu können. Durch die in der EP-Patentanmeldung beschriebene Entgegennahme von Stückgütern mittels eines jeweiligen Paares an Klemm- und/oder Greifelementen besitzt die Vorrichtung zudem einen Aufbau mit großer Dimensionierung und hohem Gewicht bzw. hoher Masse.

Eine Aufgabe der Erfindung kann aus diesem Grunde darin gesehen werden, einen Greifer und ein entsprechendes Verfahren bereitzustellen, mit welchen Stückgüter aus unterschiedlichen parallelen Reihen auf einfache Art und Weise entgegengenommen werden können. Der Greifer soll zudem einen unkomplizierten Aufbau besitzen und sich durch eine kompakte Dimensionierung sowie eine in Relation zu bekannten Greifern geringe Masse auszeichnen.

Die obig genannte Aufgabe wird mit den Gegenständen gelöst, welche die Merkmale in den unabhängigen Ansprüchen besitzen. Vorteilhafte Ausführungsformen werden durch die abhängigen Ansprüche beschrieben.

Die Erfindung betrifft einen Greifer zum Erfassen von Stückgütern, die in mehreren parallelen Reihen bewegt werden. Die Stückgüter können hierbei durch Gebinde ausgebildet sein, welche jeweils mehrere zusammengefasste Getränkebehälter besitzen. Die Getränkebehälter können beispielweise durch Getränkeflaschen bzw. PET-Getränkeflaschen und/oder durch Getränkedosen ausgebildet sein.

Der Greifer weist mindestens eine erste Greiferleiste und wenigstens eine zweite Greiferleiste auf, wobei die mindestens eine erste Greiferleiste und die wenigstens eine zweite Greiferleiste zum Ausführen einer Zustellbewegung ausgebildet sind. Über eine jeweilige Zustellbewegung können Stückgüter aus unterschiedlichen parallelen Reihen klemmend zwischen der mindestens einen ersten Greiferleiste und der wenigstens einen zweiten Greiferleiste gehalten werden.

Wie nachfolgend beschrieben, kann es sein, dass der mindestens eine Greifer einen Tragrahmen besitzt. Hierbei kann es sein, dass die mindestens eine erste Greiferleiste und die wenigstens eine zweite Greiferleiste an dem Tragrahmen angeordnet sind und im Rahmen einer jeweiligen Zustellbewegung jeweils am Tragrahmen bzw. relativ zum Tragrahmen bewegt werden. Die mindestens eine erste Greiferleiste und die wenigstens eine zweite Greiferleiste können somit jeweils in linearer Richtung bewegbar am Tragrahmen bzw. an einem gemeinsamen Tragrahmen des Greifers angeordnet sein. Insbesondere können die mindestens eine erste Greiferleiste und die wenigstens eine zweite Greiferleiste derart am Tragrahmen bzw. am gemeinsamen Tragrahmen angeordnet sein, dass eine Längserstreckung der mindestens einen ersten Greiferleiste und eine Längserstreckung der wenigstens einen zweiten Greiferleiste parallel zueinander verlaufen.

Um eine Beschädigung von Stückgütern durch eine klemmende Entgegennahme zu vermeiden, kann es sein, dass die mindestens eine erste Greiferleiste und/oder die wenigstens eine zweite Greiferleiste jeweils einen flexiblen und ggf. durch Gummi und/oder Kunststoff ausgebildeten Kontaktbereich besitzen, über welchen die mindestens eine erste Greiferleiste bzw. die wenigstens eine zweite Greiferleiste kraftbeaufschlagt mit Stückgütern in Anlage treten können.

Der Greifer umfasst mindestens eine Stützleiste, welche zwischen der mindestens einen ersten Greiferleiste und der wenigstens einen zweiten Greiferleiste angeordnet ist. Die mindestens eine Stützleiste kann zwei Breitseitenflächen besitzen, wobei eine erste Breitseitenfläche der mindestens einen ersten Greiferleiste zugewandt ist und wobei eine zweite Breitseitenfläche der wenigstens einen zweiten Greiferleiste zugewandt ist. Auch die mindestens eine Stützleiste kann ggf. zusammen mit der mindestens einen ersten Greiferleiste und der wenigstens einen zweiten Greiferleiste am Tragrahmen bzw. am gemeinsamen Tragrahmen des Greifers angeordnet sein.

Die mindestens eine Stützleiste kann derart am Tragrahmen bzw. am gemeinsamen Tragrahmen angeordnet sein, dass eine Längserstreckung der mindestens einen Stützleiste parallel zur Längserstreckung der mindestens einen ersten Greiferleiste sowie parallel zur Längserstreckung der wenigstens einen zweiten Greiferleiste verläuft.

Die mindestens eine Stützleiste ist relativ zur mindestens einen ersten Greiferleiste und zur wenigstens einen zweiten Greiferleiste derart bewegbar gelagert, dass die mindestens eine Stützleiste im Rahmen einer jeweiligen Zustellbewegung ihre Position zur kraftbeaufschlagten Anlage an Stückgütern aus unterschiedlichen parallelen Reihen bedarfsweise verändern kann.

Die mindestens eine Stützleiste ist relativ zur mindestens einen ersten Greiferleiste und zur wenigstens einen zweiten Greiferleiste derart bewegbar gelagert, dass die mindestens eine Stützleiste im Rahmen einer jeweiligen Zustellbewegung ihre Position zur kraftbeaufschlagten Anlage an Stückgütern aus unterschiedlichen parallelen Reihen bedarfsweise verändern kann und hierzu in linearer Richtung zwischen der mindestens einen ersten Greiferleiste und der wenigstens einen zweiten Greiferleiste bewegbar ist.

Durch die zusätzliche kraftbeaufschlagte Anlage von Stückgütern aus unterschiedlichen Reihen an der mindestens einen Stützleiste kann auch bei verhältnismäßig geringer Klemmkraft sichergestellt werden, dass Stückgüter aus mehreren parallelen Reihen über den Greifer sicher gehalten werden können. Über eine solche mindestens eine Stützleiste, wie sie der erfindungsgemäße Greifer besitzt, lässt sich auch bei einer Entgegennahme von Stückgütern aus mehreren parallelen Reihen sicherstellen, dass sich die Stückgüter nach einer klemmenden Entgegennahme mittels des Greifers nicht ungewollt vom Greifer lösen.

Zudem werden die Stückgüter aus den unterschiedlichen parallelen Reihen durch die kraftbeaufschlagte Anlage an der mindestens einen Stützleiste exakt in einer vorgegebenen Position klemmend gehalten, so dass mit hoher Sicherheit gewährleistet werden kann, dass sich die Stückgüter nach einer Manipulation über den Greifer in einer gewünschten Ausrichtung befinden und während der Manipulation nicht ungewollt verrutschen.

Weitere zusätzliche Kinematiken, welche bei aus dem Stand der Technik bekannten Greifern zum klemmenden Entgegennehmen von Stückgütern aus mehreren Reihen häufig vorgesehen sind, werden bei dem erfindungsgemäßen Greifer nicht benötigt und sind bei dem erfindungsgemäßen Greifer auch nicht vorgesehen.

Es kann sein, dass eine Stützleiste oder mehrere Stützleisten über mindestens eine Feder mit der mindestens einen ersten Greiferleiste derart in Verbindung stehen, dass die mindestens eine Feder zusammengedrückt und gespannt wird, sofern die eine Stützleiste oder die mehreren Stützleisten im Rahmen einer jeweiligen Zustellbewegung ihre Position zur kraftbeaufschlagten Anlage an Stückgütern aus unterschiedlichen parallelen Reihen verändert und sich hierbei der mindestens einen ersten Greiferleiste annähert.

Alternativ oder ergänzend hierzu kann es sein, dass bei dem Greifer eine Stützleiste oder mehrere Stützleisten über mindestens eine Feder mit der wenigstens einen zweiten Greiferleiste derart in Verbindung stehen, dass die mindestens eine Feder zusammengedrückt und gespannt wird, sofern die eine Stützleiste oder die mehreren Stützleisten im Rahmen einer jeweiligen Zustellbewegung ihre Position zur kraftbeaufschlagten Anlage an Stückgütern aus unterschiedlichen parallelen Reihen verändert und sich hierbei der wenigstens einen zweiten Greiferleiste annähert.

Die mindestens eine Feder kann durch mindestens eine Spiralfeder ausgebildet sein. Die Erfindung ist jedoch nicht auf solche Ausführungsbeispiele beschränkt, so dass die mindestens eine Feder beispielsweise auch als hydraulisch und/oder pneumatisch arbeitende Feder ausgebildet sein kann.

Wie vorhergehend bereits erwähnt, kann der Greifer einen Tragrahmen umfassen, an welchem eine erste Stützleiste und eine zweite Stützleiste angeordnet sind. Die erste Stützleiste und die zweite Stützleiste können derart am Tragrahmen angeordnet sein, dass die Längserstreckung der ersten Stützleiste und die Längserstreckung der zweiten Stützleiste parallel zueinander verlaufen.

Die erste Stützleiste und die zweite Stützleiste können sich hierbei zwischen der mindestens einen ersten Greiferleiste und der wenigstens einen zweiten Greiferleiste befinden, wobei die erste Stützleiste und die zweite Stützleiste jeweils relativ zur mindestens einen ersten Greiferleiste und zur wenigstens einen zweiten Greiferleiste derart bewegbar am Tragrahmen gelagert sind, dass die erste Stützleiste und die zweite Stützleiste im Rahmen einer jeweiligen Zustellbewegung ihre Position zur jeweiligen kraftbeaufschlagten Anlage an Stückgütern aus unterschiedlichen parallelen Reihen jeweils bedarfsweise verändern können.

Weiter bzw. zusätzlich kann der Greifer mindestens eine Distanzleiste umfassen, welche mindestens eine Distanzleiste sich zwischen der ersten Stützleiste und der zweiten Stützleiste befindet und ortsfest am Tragrahmen angeordnet ist. Die mindestens eine Distanzleiste kann derart ortsfest am Tragrahmen angeordnet sein, dass eine Längserstreckung der mindestens einen Distanzleiste parallel zur jeweiligen Längserstreckung der ersten Stützleiste und der zweiten Stützleiste verläuft. Bei solchen Ausführungsformen besteht die Möglichkeit, dass der Greifer im Rahmen einer jeweiligen Zustellbewegung in vier parallelen Reihen bewegte Stückgüter klemmend entgegennehmen kann.

Weiter kann es sein, dass der Greifer mindestens ein Langloch ausbildet, über welches mindestens eine Langloch die mindestens eine Stützleiste in linearer Richtung bewegbar gelagert ist. Ausführungsformen, bei welchen die mindestens eine Stützleiste über mindestens ein Langloch in linearer Richtung bewegbar gelagert ist, haben sich in der Praxis bewährt, da durch eine solche Lagerung die Bewegungsfreiheit für die mindestens eine Stützleiste auf einfache Art und Weise begrenzt werden kann.

Mittels der Bewegung der mindestens einen Stützleiste entlang des mindestens einen Langloches kann die mindestens eine Stützleiste bei einem Öffnen der mindestens einen ersten Greiferleiste und der wenigstens einen zweiten Greiferleiste ggf. in eine Ausgangslage zurückgeführt werden, welche Ausgangslage über einen Endbereich des mindestens einen Langloches vorgegeben wird.

Die Erfindung betrifft zudem ein Portalsystem mit mindestens einem Greifer gemäß mindestens einem Ausführungsbeispiel der vorherigen Beschreibung. Das Portalsystem umfasst zudem wenigstens eine Horizontalfördereinrichtung zur Bewegung von Stückgütern in mehreren parallelen Reihen sowie eine Steuer- und/oder Regeleinrichtung.

Es ist vorgesehen, dass der mindestens eine Greifer über die Steuer- und/oder Regeleinrichtung derart ansteuerbar ist, dass die über die wenigstens eine Horizontalfördereinrichtung in mehreren parallelen Reihen bewegten Stückgüter durch ein bedarfsweises Drehen und/oder Versetzen in eine relative Ausrichtung zueinander überführbar sind, welche auf eine aus mehreren Stückgütern zu bildende palettierfähige Lage abgestimmt ist. Die wenigstens eine Horizontalfördereinrichtung kann ggf. mindestens ein umlaufend angetriebenes Transportband umfassen, auf welchem die in mehreren parallelen Reihen bewegten Stückgüter aufstehen.

Auch betrifft die Erfindung ein Verfahren zum Umgang mit Stückgütern. Merkmale, welche vorhergehend bereits zu Ausführungsformen des Portalsystems sowie zu Ausführungsformen des Greifers genannt wurden, können ebenso bei den nachfolgend beschriebenen Ausführungsformen des Verfahrens vorgesehen sein und werden nicht mehrfach erwähnt.

Ebenso können nachfolgend zu diversen Ausführungsformen des erfindungsgemäßen Verfahrens beschriebene Merkmale bei den vorhergehend bereits beschriebenen Ausführungsformen des erfindungsgemäßen Greifers bzw. des erfindungsgemäßen Portalsystems vorgesehen sein. Das Portalsystem kann ggf. zur Durchführung der nachfolgend beschriebenen Ausführungsformen des erfindungsgemäßen Verfahrens ausgebildet sein.

Bei dem Verfahren ist vorgesehen, dass wenigstens eine Horizontalfördereinrichtung Stückgüter in mehreren parallelen Reihen bewegt und dass mindestens ein Greifer über mindestens eine erste Greiferleiste und wenigstens eine zweite Greiferleiste Stückgüter aus den mehreren parallelen Reihen zusammenschiebt, bis die Stückgüter aus den mehreren parallelen Reihen klemmend zwischen der mindestens einen ersten Greiferleiste und der wenigstens einen zweiten Greiferleiste gehalten werden.

Weiter ist vorgesehen, dass der mindestens eine Greifer mindestens eine Stützleiste besitzt, die sich zwischen der mindestens einen ersten Greiferleiste und der wenigstens einen zweiten Greiferleiste befindet. Die mindestens eine Stützleiste wird durch ihre bewegbare Lagerung gemeinsam mit den jeweiligen Stückgütern aus den mehreren unterschiedlichen parallelen Reihen zusammengeschoben, bis die mindestens eine Stützleiste hierbei jeweils kraftbeaufschlagt mit Stückgütern aus unterschiedlichen parallelen Reihen in Anlage gelangt und die Stückgüter aus den unterschiedlichen parallelen Reihen unter kraftbeaufschlagter Anlage an der mindestens einen Stützleiste klemmend zwischen der mindestens einen ersten Greiferleiste und der wenigstens einen zweiten Greiferleiste gehalten werden.

Es kann sein, dass eine Stützleiste oder mehrere Stützleisten über mindestens eine Feder mit der mindestens einen ersten Greiferleiste in Verbindung stehen, wobei die mindestens eine Feder während des Zusammenschiebens ab einem Kontakt der einen Stützleiste oder der mehreren Stützleisten zu Stückgütern einer Reihe gespannt wird, wodurch die eine Stützleiste oder die mehreren Stützleisten über die Federkraft der sodann gespannten Feder kraftbeaufschlagt mit den Stückgütern dieser Reihe in Anlage steht.

Alternativ oder ergänzend hierzu kann es sein, dass eine Stützleiste oder mehrere Stützleisten über mindestens eine Feder mit der wenigstens einen zweiten Greiferleiste in Verbindung stehen, wobei die mindestens eine Feder während des Zusammenschiebens ab einem Kontakt der einen Stützleiste oder der mehreren Stützleisten zu Stückgütern einer Reihe gespannt wird, wodurch die eine Stützleiste oder die mehreren Stützleisten über die Federkraft der sodann gespannten Feder kraftbeaufschlagt mit den Stückgütern dieser Reihe in Anlage steht.

Bewährt hat es sich, wenn es sich bei der mindestens einen Feder um mindestens eine Spiralfeder handelt. Alternativ hierzu kann die mindestens eine Feder jedoch auch als hydraulisch und/oder pneumatisch arbeitende Feder ausgebildet sein.

Es kann sein, dass die klemmend zwischen der mindestens einen ersten Greiferleiste und der wenigstens einen zweiten Greiferleiste gehaltenen Stückgüter gegenüber weiteren auf der wenigstens einen Horizontalfördereinrichtung angeordneten Stückgütern gedreht und/oder versetzt und hierauf freigegeben werden, woraufhin die wenigstens eine Horizontalfördereinrichtung die freigegebenen Stückgüter fortbewegt. Hierbei kann es sein, dass im Verlauf einer Freigabe von Stückgütern die eine Stützleiste oder die mehreren Stützleisten, welche über die mindestens eine Feder mit der mindestens einen ersten Greiferleiste in Verbindung steht, mittels der Federkraft der bis dahin gespannten mindestens einen Feder in eine Ausgangslage zurückbewegt werden.

Alternativ oder ergänzend hierzu kann es sein, dass im Verlauf einer Freigabe von Stückgütern die eine Stützleiste oder die mehreren Stützleisten, welche über die mindestens eine Feder mit der wenigstens einen zweiten Greiferleiste in Verbindung steht, mittels der Federkraft der bis dahin gespannten mindestens einen Feder in eine Ausgangslage zurückbewegt werden.

Auch ist denkbar, dass im Verlauf einer Freigabe von Stückgütern die eine Stützleiste oder die mehreren Stützleisten, welche über die mindestens eine Feder mit der mindestens einen ersten Greiferleiste in Verbindung steht, mittels einer Relativbewegung der mindestens einen ersten Greiferleiste gegenüber der einen Stützleiste oder gegenüber den mehreren Stützleisten in eine Ausgangslage zurückbewegt wird, welche Ausgangslage über mindestens ein Langloch vorgegeben wird, über welches mindestens eine Langloch die eine Stützleiste oder die mehreren Stützleisten in linearer Richtung bewegbar gelagert sind.

Alternativ oder ergänzend hierzu ist vorstellbar, dass im Verlauf einer Freigabe von Stückgütern die eine Stützleiste oder die mehreren Stützleisten, welche über die mindestens eine Feder mit der wenigstens einen zweiten Greiferleiste in Verbindung steht, mittels einer Relativbewegung der wenigstens einen zweiten Greiferleiste gegenüber der einen Stützleiste oder gegenüber den mehreren Stützleisten in eine Ausgangslage zurückbewegt wird, welche Ausgangslage über mindestens ein Langloch vorgegeben wird, über welches mindestens eine Langloch die eine Stützleiste oder die mehreren Stützleisten in linearer Richtung bewegbar gelagert sind.

Wie vorhergehend erwähnt, kann es sein, dass die klemmend zwischen der mindestens einen ersten Greiferleiste und der wenigstens einen zweiten Greiferleiste gehaltenen Stückgüter gegenüber weiteren auf der wenigstens einen Horizontalfördereinrichtung angeordneten Stückgütern gedreht und/oder versetzt und hierauf freigegeben werden, woraufhin die wenigstens eine Horizontalfördereinrichtung die freigegebenen Stückgüter fortbewegt.

Hierbei kann es sein, dass die mindestens eine Feder über eine Ruhelage hinausgezogen wird, indem die eine Stützleiste oder die mehreren Stützleistein in Anlage mit ehemals klemmend gehaltenen Stückgütern stehen und die mindestens eine erste Greiferleiste, welche mit der einen Stützleiste oder den mehreren Stützleisten in Verbindung steht, hierbei relativ zur einen Stützleiste oder zu den mehreren Stützleisten bewegt wird bzw. ihren relativen Abstand zu der einen Stützleiste oder zu den mehreren Stützleisten vergrößert. Alternativ oder ergänzend hierzu kann es sein, dass die mindestens eine Feder über eine Ruhelage hinausgezogen wird, indem die eine Stützleiste oder die mehreren Stützleisten in Anlage mit ehemals klemmend gehaltenen Stückgütern stehen und die wenigstens eine zweite Greiferleiste, welche mit der einen Stützleiste oder den mehreren Stützleisten in Verbindung steht, hierbei relativ zur einen Stützleiste oder zu den mehreren Stützleisten bewegt wird. Solche Ausführungsformen haben sich bewährt, sofern eine Federkraft der mindestens einen Feder nicht ausreicht, um die jeweilige Stützleiste in eine Ausgangslage zu überführen.

Weiter kann es sein, dass der mindestens eine Greifer eine erste Stützleiste und eine zweite Stützleiste besitzt, die sich jeweils zwischen der mindestens einen ersten Greiferleiste und der wenigstens einen zweiten Greiferleiste befinden und jeweils an einem Tragrahmen des mindestens einen Greifers angeordnet sind, wobei die erste Stützleiste und die zweite Stützleiste durch eine jeweilige bewegbare Lagerung am Tragrahmen gemeinsam mit den jeweiligen Stückgütern aus den mehreren unterschiedlichen parallelen Reihen zusammengeschoben werden, bis die erste Stützleiste und die zweite Stützleiste hierbei jeweils kraftbeaufschlagt mit Stückgütern aus unterschiedlichen parallelen Reihen in Anlage gelangen und die Stückgüter aus den unterschiedlichen parallelen Reihen unter kraftbeaufschlagter Anlage an der ersten Stützleiste und der zweiten Stützleiste klemmend zwischen der mindestens einen ersten Greiferleiste und der wenigstens einen zweiten Greiferleiste gehalten werden.

Zudem kann wenigstens eine Distanzleiste vorgesehen sein, die sich zwischen der ersten Stützleiste und der zweiten Stützleiste befindet und ortsfest am Tragrahmen gelagert ist, wobei Stückgüter aus unterschiedlichen parallelen Reihen während des jeweiligen Zusammenschiebens kraftbeaufschlagt mit der wenigstens einen Distanzleiste in Anlage gelangen und die Stückgüter aus den unterschiedlichen parallelen Reihen unter kraftbeaufschlagter Anlage an der wenigstens einen Distanzleiste klemmend zwischen der mindestens einen ersten Greiferleiste und der wenigstens einen zweiten Greiferleiste gehalten werden.

In bevorzugten Ausführungsformen kann der mindestens eine Greifer über ein Portalsystem geführt werden, wobei der mindestens eine Greifer die Stückgüter aus den mehreren parallelen Reihen, welche der mindestens eine Greifer unter kraftbeaufschlagter Anlage an der mindestens einen Stützleiste klemmend zwischen der mindestens einen ersten Greiferleiste und der wenigstens einen zweiten Greiferleiste hält, durch Drehen und/oder Versetzen in eine relative Ausrichtung gegenüber weiteren Stückgütern bringt, welche relative Ausrichtung auf eine aus mehreren Stückgütern zu bildende palettierfähige Lage abgestimmt ist.

Auch kann es sein, dass der mindestens eine Greifer über einen Mehrachsroboter oder Knickarmroboter geführt wird, wobei der mindestens eine Greifer die Stückgüter aus den mehreren parallelen Reihen, welche der mindestens eine Greifer unter kraftbeaufschlagter Anlage an der mindestens einen Stützleiste klemmend zwischen der mindestens einen ersten Greiferleiste und der wenigstens einen zweiten Greiferleiste hält, durch Drehen und/oder Versetzen in eine Ausrichtung gegenüber weiteren Stückgütern bringt, welche relative Ausrichtung auf eine aus mehreren Stückgütern zu bildende palettierfähige Lage abgestimmt ist.

Auch kann es sein, dass der mindestens eine Greifer die Stückgüter aus den unterschiedlichen parallelen Reihen manipuliert und hierzu insbesondere versetzt und/oder dreht, während die Stückgüter aus den unterschiedlichen parallelen Reihen klemmend zwischen der mindestens einen ersten Greiferleiste und der wenigstens einen zweiten Greiferleiste gehalten werden.

Es kann sodann sein, dass die bis dahin klemmend gehaltenen Stückgüter freigegeben werden, wozu die mindestens eine erste Greiferleiste und die wenigstens eine zweite Greiferleiste auseinanderbewegt werden und dass die mindestens eine Stützleiste bereits manipulierte Stückgüter auseinanderschiebt, so dass zwischen bereits manipulierten Stückgütern hierdurch ein Spalt gebildet wird.

Es sei an dieser Stelle ausdrücklich erwähnt, dass alle Aspekte und Ausführungsvarianten, die im Zusammenhang mit dem erfindungsgemäßen Verfahren erläutert wurden, gleichermaßen Teilaspekte des erfindungsgemäßen Greifers und des erfindungsgemäßen Portalsystems betreffen oder bilden können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für den erfindungsgemäßen Greifer und das erfindungsgemäße Portalsystem. In umgekehrter Weise gilt dasselbe, so dass auch alle Aspekte und Ausführungsvarianten, die im Zusammenhang mit dem erfindungsgemäßen Greifer und dem erfindungsgemäßen Portalsystem erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zum erfindungsgemäßen Portalsystem oder zum erfindungsgemäßen Greifer von bestimmten Aspekten und/oder Zusammenhängen und/oder Wirkungen die Rede ist, so gilt dies gleichermaßen für das erfindungsgemäße Verfahren.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Wenn auch im Zusammenhang der nachfolgenden Beschreibung der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise des erfindungsgemäßen Greifers ein besseres Verständnis für die in den Ansprüchen definierte Erfindung abzuleiten.
Figuren 1A bis 1C zeigen mehrere Betriebszustände einer Ausführungsform eines erfindungsgemäßen Greifers und verdeutlichen jeweils einzelne Schritte, wie sie bei diversen Ausführungsformen des erfindungsgemäßen Verfahrens vorgesehen sein können.
Figuren 2A und 2B zeigen weitere Betriebszustände einer Ausführungsform eines erfindungsgemäßen Greifers und verdeutlichen jeweils einzelne Schritte, wie sie bei diversen Ausführungsformen des erfindungsgemäßen Verfahrens vorgesehen sein können.
Figuren 3A und 3B zeigen weitere Betriebszustände der Ausführungsform des erfindungsgemäßen Greifers und verdeutlichen jeweils einzelne Schritte, wie sie bei diversen Ausführungsformen des erfindungsgemäßen Verfahrens vorgesehen sein können.
Fig. 4 zeigt im Flussdiagramm einzelne Schritte, wie sie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

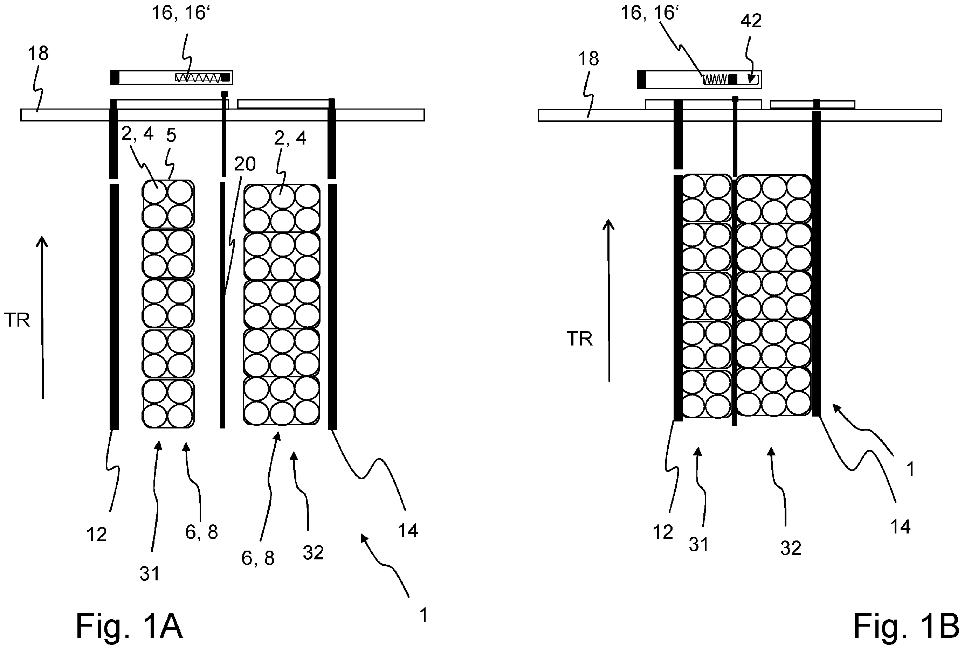

Die Figuren 1A bis 3B zeigen jeweils eine Ausführungsform eines erfindungsgemäßen Greifers 1 und verdeutlichen jeweils einzelne Schritte, wie sie bei diversen Ausführungsformen des erfindungsgemäßen Verfahrens 100 vorgesehen sein können.

Der Greifer 1 ist in den Draufsichten der Figuren 1A und 1B lediglich schematisch dargestellt und kann in der Praxis von einem Portalsystem geführt sein. Ein solches Portalsystem kann mehrere Greifer 1 entsprechend der Darstellung nach Figuren 1A bis 1C besitzen, welche mehreren Greifer 1 das Portalsystem aufeinander abgestimmt bewegt.

Die Stückgüter 6, bei welchen es sich um Gebinde 8 handelt, stehen auf einer in den Figuren 1A und 1B nicht weiter dargestellten Horizontalfördereinrichtung auf, welche sich somit in Bildrichtung unterhalb der Stückgüter 6 bzw. unterhalb der Gebinde 8 befindet. Jedes Gebinde 8 umfasst mehrere Artikel 2, die vorliegend jeweils als Getränkebehälter 4 ausgebildet sind und über eine Umreifung 5 zusammengehalten werden.

In der Praxis bestehen weitere Möglichkeiten, um mehrere Artikel 2 eines Gebindes 8 miteinander zu verbinden. Beispielsweise können Artikel 2 über Klebeverbindungen und/oder durch flächige Verpackungszuschnitte aneinandergehalten sein.

Über die Horizontalfördereinrichtung werden die Stückgüter 6 bzw. die Gebinde 8 vorliegend in zwei parallelen Reihen 31 und 32 entlang der Transportrichtung TR bewegt. Die Konfiguration des Greifers 1 ist auf die klemmende Entgegennahme von Stückgütern 6 abgestimmt, die in genau zwei parallelen Reihen 31 und 32 bewegt werden.

So kann der Greifer 1 während einer Bewegung der Stückgüter 6 bzw. der Gebinde 8 in Transportrichtung TR im Rahmen eines Arbeitstaktes Stückgüter 6 bzw. Gebinde 8 der ersten Reihe 31 sowie zusätzlich Stückgüter 6 bzw. Gebinde 8 der zweiten Reihe 32 klemmend entgegennehmen und sodann bedarfsweise schräg oder lotrecht gegenüber der Transportrichtung TR versetzen sowie bedarfsweise um eine vertikal verlaufende Achse drehen. Über ein solches Drehen und schräges bzw. lotrechtes Versetzen bringt der Greifer 1 mehrere Stückgüter 6 bzw. Gebinde 8 in eine relative Anordnung zueinander, welche auf eine spätere Palettierung abgestimmt ist.

Nach einem Drehen und/oder schrägen Versetzen können die Stückgüter 6 bzw. die Gebinde 8 sodann mittels der Horizontalfördereinrichtung fortbewegt werden. Während der Manipulation über den Greifer 1 können die Stückgüter 8 durchgehend ihren Kontakt zur Horizontalfördereinrichtung beibehalten, so dass der Greifer 1 die Stückgüter 8 nicht anheben muss, um die Stückgüter 8 zu drehen oder schräg bzw. lotrecht zur Transportrichtung TR zu versetzen.

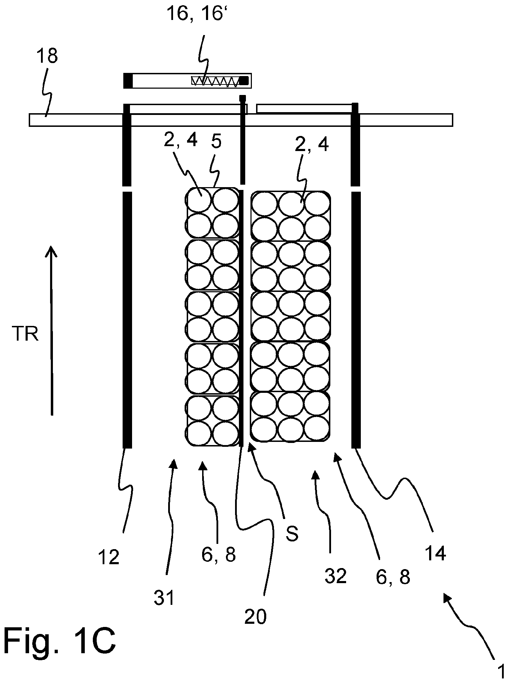

In den Figuren 1A, 1B und 1C umfasst jedes Gebinde 8 der ersten Reihe 31 genau vier Getränkebehälter 4. Weiter umfasst jedes Gebinde 8 der zweiten Reihe 32 genau sechs Getränkebehälter 4, so dass die mit der ersten Reihe 31 bewegten Gebinde 8 sich von den mit der zweiten Reihe 32 bewegten Gebinden 8 im Hinblick auf ihre Größe bzw. Dimensionierung unterscheiden.

Eine Zusammenschau der Fig. 1A mit der Fig. 1B verdeutlicht bereits, dass die erste Greiferleiste 12 und die zweite Greiferleiste 14 zur jeweiligen klemmenden Entgegennahme von Gebinden 8 aus der ersten Reihe 31 und aus der zweiten Reihe 32 eine Zustellbewegung ausführen, bei welcher die erste Greiferleiste 12 und die zweite Greiferleiste 14 sich einander nähern bzw. ihren relativen Abstand zueinander verkleinern. Eine solche Zustellbewegung wird mittels eines als Bestandteil des Greifers 1 ausgebildeten Aktors bewirkt, welcher die erste Greiferleiste 12 und die zweite Greiferleiste 14 jeweils in linearer Richtung aufeinander zubewegt, um Stückgüter 6 der ersten Reihe 31 und Stückgüter 6 der zweiten Reihe 32 klemmend zu erfassen.

Um in die Position nach Fig. 1A zu gelangen, wird der Greifer 1 in Richtung von oben kommend abgesenkt, bis sich sämtliche im Rahmen eines jeweiligen Arbeitstaktes entgegenzunehmenden Stückgüter 6 der ersten Reihe 31 und der zweiten Reihe 32 zwischen der ersten Greiferleiste 12 und der zweiten Greiferleiste 14 befinden.

Da die Stückgüter 6 fortlaufend bzw. ohne Unterbrechung über die Horizontalfördereinrichtung in Transportrichtung TR bewegt werden, kann der Greifer 1 mit den Stückgütern 6 mitbewegt werden, während die erste Greiferleiste 12 und die zweite Greiferleiste 14 ihre Zustellbewegung ausführen. Eine Geschwindigkeit des Greifers 1 kann hierbei einer Fördergeschwindigkeit der Horizontalfördereinrichtung entsprechen, mit welcher die Horizontalfördereinrichtung Stückgüter 6 in Transportrichtung TR bewegt.

Sofern der Greifer 1 an einem Arbeitsarm eines Mehrachsroboters angeordnet ist, kann der Mehrachsroboter den Greifer 1 durch eine Bewegung seines Arbeitsarmes geschwindigkeitssynchron mit den Stückgütern 6 führen. Sofern der Greifer 1 hängend an einem Portalsystem angeordnet ist, kann der Greifer 1 über das Portalsystem geschwindigkeitssynchron mit den in zwei parallelen Reihen 31 und 32 bewegten Stückgütern 6 mitgeführt werden.

Zusätzlich zur ersten Greiferleiste 12 und zur zweiten Greiferleiste 14 umfasst der Greifer 1 eine Stützleiste 20, die zwischen der ersten Greiferleiste 12 und der zweiten Greiferleiste 14 angeordnet ist. Die Stützleiste 20 ist derart bewegbar gelagert, dass die Stützleiste 20 ihre Position verändern kann, sofern die erste Greiferleiste 12 und die zweite Greiferleiste 14 eine Zustellbewegung zur klemmenden Entgegennahme von Stückgütern 6 ausführen. Hierbei kann die Stützleiste 20 sowohl mit Stückgütern 6 der ersten Reihe 31 als auch mit Stückgütern 6 der zweiten Reihe 32 jeweils kraftbeaufschlagt in Anlage treten.

In diversen Ausführungsformen kann es sein, dass die Stützleiste 20 zusammen mit der ersten Greiferleiste 12 und der zweiten Greiferleiste 14 über einen eigenen Aktor bewegt und hierbei lotrecht zur Transportrichtung TR verstellt wird. Vorliegend wird die Stützleiste 20 jedoch mittels einer Zustellbewegung passiv bewegt bzw. gemeinsam mit den Stückgütern 6 der ersten Reihe 31 und den Stückgütern 6 der zweiten Reihe 32 über die erste Greiferleiste 12 und die zweite Greiferleiste 14 zusammengeschoben.

Vorliegend steht die Stützleiste 20 über eine Feder 16, welche als Spiralfeder 16' ausgebildet ist, mit der ersten Greiferleiste 12 in Verbindung. In der Darstellung der Fig. 1A ist die Feder 16 nicht gespannt bzw. befindet sich in einer Ruhelage. Sofern die erste Greiferleiste 12 und die zweite Greiferleiste 14 eine Zustellbewegung zur klemmenden Entgegennahme von Stückgütern 6 ausführen, werden die erste Greiferleiste 12 und die zweite Greiferleiste 14 mit gleichem Hub aufeinander zubewegt.

Die erste Greiferleiste 12 tritt bei einer solchen Zustellbewegung bzw. bei einem solchen Hub zu einem bestimmten Zeitpunkt mit Stückgütern 6 der ersten Reihe 31 in Oberflächenkontakt und schiebt diese Stückgüter 6 sodann in Richtung der gegenüberliegenden zweiten Greiferleiste 14. Ebenso tritt die zweite Greiferleiste 14 im Rahmen einer solchen Zustellbewegung bzw. eines solchen Hubes zu einem bestimmten Zeitpunkt mit Stückgütern 6 der zweiten Reihe 32 in Oberflächenkontakt und schiebt diese Stückgüter 6 der zweiten Reihe 32 sodann in Richtung der ersten Greiferleiste 12.

Die Figuren 1A und 1B lassen hierbei erkennen, dass die Stückgüter 6 der zweiten Reihe 32 lotrecht zur Transportrichtung TR eine größere Dimensionierung bzw. eine größere Erstreckung besitzen. Da die erste Greiferleiste 12 und die zweite Greiferleiste 14 bei einer Zustellbewegung mit identischer Geschwindigkeit aufeinander zubewegt werden, erfolgt ein Oberflächenkontakt zwischen den Stückgütern 6 der zweiten Reihe 32 zur Greiferleiste 14, bevor die erste Greiferleiste 12 mit den Stückgütern 6 der ersten Reihe 31 in Kontakt gelangt.

Aus diesem Grunde treten die Stückgüter 6 der zweiten Reihe 32 im Rahmen einer Zustellbewegung mit der bis dahin etwa mittig zwischen der ersten Greiferleiste 12 und der zweiten Greiferleiste 14 angeordneten Stützleiste 20 in Kontakt, bevor die Stützleiste 20 auf die Stückgüter 6 der ersten 31 Reihe trifft.

Aufgrund der bewegbaren Lagerung der Stützleiste 20 wird die Stützleiste 20 bei einer Zustellbewegung zusammen mit den Stückgütern 6 der zweiten Reihe 32 in Richtung der ersten Greiferleiste 12 geschoben. Hierbei wird die Feder 16 bzw. die Spiralfeder 16' gespannt, welche ab einem beginnenden Kontakt mit den Stückgütern 6 der zweiten Reihe diese Stückgüter 6 der zweiten Reihe 32 kraftbeaufschlagt gegen die zweite Greiferleiste 14 drückt.

Die erste Greiferleiste 12 schiebt zudem die Stückgüter 6 der ersten Reihe 31 gegen die Stützleiste 20, wobei die Stützleiste 20 ab einem Kontakt mit den Stückgütern 6 der ersten Reihe 31 nicht weiter in Richtung der ersten Greiferleiste 12 bewegt werden kann. Sowohl die Stückgüter 6 der ersten Reihe 31 als auch die Stückgüter 6 der zweiten Reihe 32 sind sodann entsprechend Fig. 1B klemmend zwischen der ersten Greiferleiste 12 und der zweiten Greiferleiste 14 gehalten, wobei die Stützleiste 20 sowohl mit Stückgütern 6 der ersten Reihe 31 als auch mit Stückgütern 6 der zweiten Reihe 32 kraftbeaufschlagt in Anlage steht.

Bei einer starren Anbindung einer Stützleiste 20 an einen Tragrahmen 18 wäre es bei der beschriebenen Zustellbewegung bzw. Hubbewegung nicht möglich, mehrere Stückgüter 6, die eine unterschiedliche Dimensionierung besitzen, aus unterschiedlichen parallelen Reihen klemmend entgegenzunehmen.

Der beschriebene Greifer 1 besitzt somit eine hohe Flexibilität im Hinblick auf eine klemmende Entgegennahme von Stückgütern 6, welche unterschiedliche Dimensionierungen besitzen und in mehreren parallelen Reihen 31 bzw. 32 bewegt werden. Auch ist der Aufbau des Greifers 1 einfach gehalten, so dass ein solcher Greifer 1 ohne eine komplexe Mechanik auskommen kann.

In der Darstellung der Fig. 1B sind die Stückgüter 6 der ersten Reihe 31 und die Stückgüter 6 der zweiten Reihe 32 bereits klemmend zwischen der ersten Greiferleiste 12 und der zweiten Greiferleiste 14 gehalten. Der Greifer 1 kann somit die Stückgüter 6 schräg oder lotrecht zur Transportrichtung TR versetzen oder auch bedarfsweise Drehen, sofern dies erforderlich sein sollte, um die klemmend gehaltenen Stückgüter 6 in eine relative Ausrichtung gegenüber weiteren Stückgütern 6 zu überführen, die auf eine spätere Palettierung abgestimmt ist. Nachdem die klemmend gehaltenen Stückgüter 6 entsprechend manipuliert bzw. schräg oder lotrecht zur Transportrichtung TR versetzt und ggf. bedarfsweise gedreht wurden, kann die klemmende Verbindung zwischen den Greiferleisten 12 bzw. 14 und den Stückgütern 6 aufgehoben werden.

Das Aufheben der klemmenden Verbindung zwischen den Stückgütern 6 und dem Greifer 1 wird aus einer Zusammenschau der Figuren 1B und 1C deutlich. Hierzu werden die erste Greiferleiste 12 und die zweite Greiferleiste 14 geöffnet bzw. der relative Abstand zwischen der ersten Greiferleiste 12 und der zweiten Greiferleiste 14 vergrößert, wodurch die erste Greiferleiste 12 und die zweite Greiferleiste 14 jeweils ihren Oberflächenkontakt zu den Stückgütern 6 verlieren.

Die Stützleiste 20 verbleibt zunächst in Anlage mit den Stückgütern 6 der ersten Reihe 31 und der zweiten Reihe 32, da die Federkraft der Feder 16 erst mit einem vollständigem Öffnen der ersten Greiferleiste 12 und der zweiten Greiferleiste 14 aufgehoben ist. Mit einer Vergrößerung des relativen Abstandes entspannt sich die Feder 16 zunehmend, bis die Feder 16 eine Ruhelage entsprechend Fig. 1A einnimmt. Bis zu diesem Zeitpunkt steht die Stützleiste 20 weiterhin mit den Stückgütern 6 der ersten Reihe 31 und den Stückgütern 6 der zweiten Reihe 32 in Anlage.

Wenn die Feder 16 ihre Ruheposition bzw. ihre Ruhelage erreicht hat, wir die erste Greiferleiste 12, mit welcher die Stützleiste 20 über die Feder 16 in Verbindung steht, über einen geringen Hub noch in Gegenrichtung der zweiten Greiferleiste 14 bewegt. Hierbei kann es sein, dass die Feder 16 über ihre Ruhelage hinausgezogen wird. Da die Stützleiste 20 während dieses geringen Hubes weiterhin an Stückgütern 6 der ersten Reihe 31 anliegt und diese Stückgüter 6 einen Widerstand auf die erste Stützleiste 20 ausüben, schlägt die Stützleiste 20 bei dem geringen Hub der ersten Greiferleiste 12 an einem Endbereich des Langloches 42 an und erreicht somit eine für die Stützleiste 20 vorgesehene Relativposition gegenüber der ersten Greiferleiste 12, in welcher die Stützleiste 20 bis zur erneuten Entgegennahme weiterer Stückgüter 6 zunächst verbleibt.

Hierauf wird die erste Greiferleiste 12 weiter um einen geringen Hub in Gegenrichtung der zweiten Greiferleiste 14 bewegt, bis zwischen den Stückgütern 6 der ersten Reihe 31 und den Stückgütern 6 der zweiten Reihe 32 ein Spalt S entsteht. Die Stückgüter 6 der ersten Reihe 31 werden somit von den Stückgütern 6 der zweiten Reihe 32 über die Stützleiste 20 senkrecht zur Transportrichtung TR weggezogen, bis zwischen den Stückgütern 6 der ersten Reihe 31 und den Stückgütern 6 der zweiten Reihe 32 ein Spalt S entsteht.

Nachdem der Spalt S gebildet wurde, kann der Greifer 1 über das Portalsystem oder den Mehrachsroboter in vertikaler Richtung angehoben und zur klemmenden Entgegennahme in Richtung weiterer Stückgüter 6 bewegt werden. Die bereits über den Greifer 1 klemmend entgegengenommenen und manipulierten Stückgüter 6 werden über die Horizontalfördereinrichtung einer nicht mit dargestellten Verpackungsstation zugeführt, welche aus den manipulierten Stückgütern 6 eine palettierfähige Lage bildet.

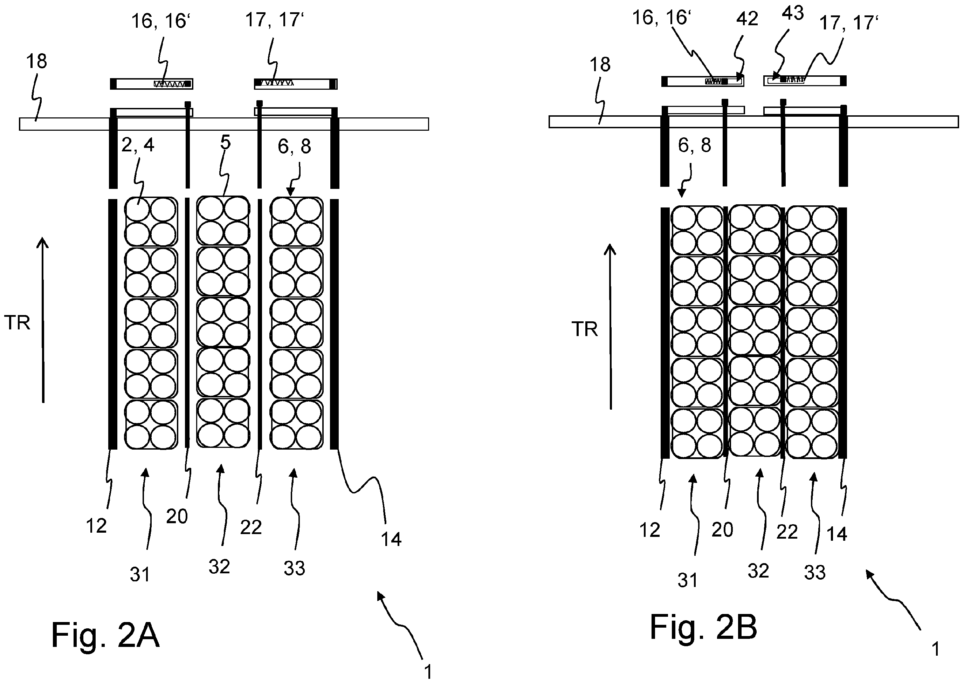

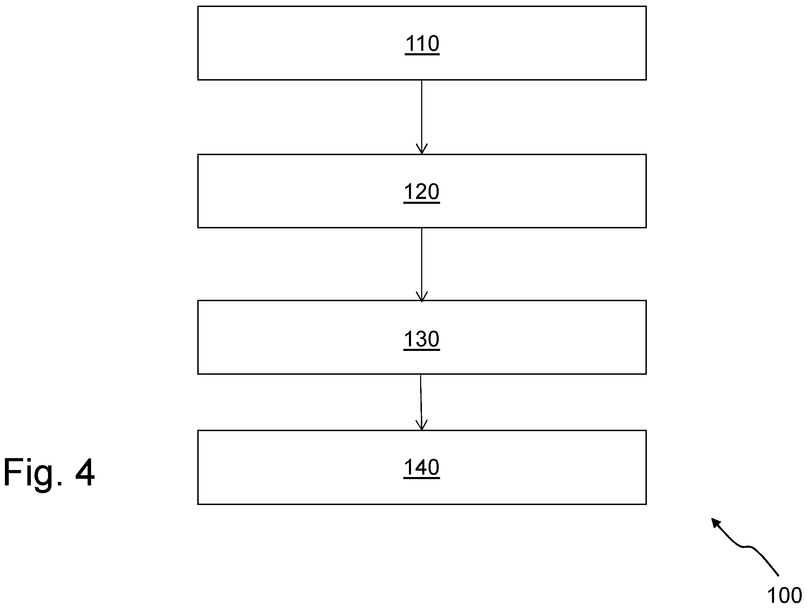

Die schematischen Draufsichten der Figuren 2A und 2B zeigen eine weitere Ausführungsform eines erfindungsgemäßen Greifers 1 und verdeutlichen einzelne Schritte, wie sie bei diversen Ausführungsformen des erfindungsgemäßen Verfahrens 100 (vgl. Fig. 4) vorgesehen sein können.

Auch der Greifer 1 entsprechend der Ausführungsform nach Figuren 2A und 2B umfasst eine erste Greiferleiste 12 und eine zweite Greiferleiste 14, welche zur klemmenden Entgegennahme von Stückgütern 6 eine Zustellbewegung ausführen können. Die in Figuren 2A und 2B nicht mit dargestellte Horizontalfördereinrichtung transportiert Stückgüter 6 in drei Reihen 31, 32 und 33 entlang der Transportrichtung TR.

Der Greifer 1 entsprechend der Ausführungsform nach Figuren 2A und 2B ist in der Lage, im Rahmen eines jeweiligen Arbeitstaktes Stückgüter 6 aus drei unterschiedlichen parallelen Reihen 31, 32 und 33 entgegenzunehmen, indem der Greifer 1 über die erste Greiferleiste 12 und die zweite Greiferleiste 14 eine jeweilige Zustellbewegung ausführt.

Zwischen der ersten Greiferleiste 12 und der zweiten Greiferleiste 14 sind bei der Ausführungsform eines Greifers 1 nach Figuren 2A und 2B genau zwei Stützleisten 20 und 22 angeordnet. Die Stützleiste 20 steht über eine Feder 16 mit der ersten Greiferleiste 12 in Verbindung. Die Stützleiste 22 steht über eine Feder 17 mit der zweiten Greiferleiste 14 in Verbindung. Gegen die Rückstellkraft einer jeweiligen Feder 16 bzw. 17 sind die erste Stützleiste 20 und die zweite Stützleiste 22 in einem jeweiligen Langloch 42 bzw. 43 in linearer Richtung bewegbar gelagert.

Um Stückgüter 6 aus den drei parallelen Reihen 31, 32 und 33 entgegenzunehmen, wird auch der Greifer 1 aus dem Ausführungsbeispiel nach Figuren 2A und 2B zunächst von oben kommend in Richtung der Stückgüter 6 abgesenkt. Hierauf befinden sich Stückgüter 6 der ersten Reihe 31 zwischen der ersten Greiferleiste 12 und der Stützleiste 20. Stückgüter 6 der zweiten Reihe 32 befinden sich sodann zwischen den Stützleisten 20 und 22. Stückgüter 6 der dritten Reihe 33 befinden sich nach Absenken des Greifers 1 bzw. entsprechend Fig. 2A zwischen der Stützleiste 22 und der zweiten Greiferleiste 14.

Die Zustellbewegung der ersten Greiferleiste 12 und der zweiten Greiferleiste 14, über welche im Rahmen eines jeweiligen Arbeitstaktes Stückgüter 6 aus den drei parallelen Reihen 31, 32 und 33 entgegengenommen werden können, wird aus einer Zusammenschau der Fig. 2A mit Fig. 2B deutlich.

Die erste Greiferleiste 12 und die zweite Greiferleiste 14 werden hierbei mit identischem Hub aufeinander zubewegt, wodurch die erste Greiferleiste 12 mit Stückgütern 6 der ersten Reihe 31 und die zweite Greiferleiste 14 mit Stückgütern 6 der dritten Reihe 33 in Oberflächenkontakt gelangt. Gleichzeitig schiebt die erste Greiferleiste 12 die Stützleiste 20, mit welcher die erste Greiferleiste 12 über die Feder 16 in Verbindung steht, auf Anschlag mit den Stückgütern 6 der zweiten Reihe 32.

Ebenso schiebt zeitgleich die zweite Greiferleiste 14, welche über die Feder 17 mit der Stützleiste 22 in Verbindung steht, die Stützleiste 22 auf Anschlag mit den Stückgütern 6 der zweiten Reihe 32. Die Stützleiste 20 sowie die Stützleiste 22 gelangen somit zumindest näherungsweise zeitgleich mit Stückgütern 6 der zweiten Reihe 32 in Anlage.

Die Zustellbewegung der ersten Greiferleiste 12 und der zweiten Greiferleiste 14 bzw. der jeweilige Hub der ersten Greiferleiste 12 und der zweiten Greiferleiste 14 erfolgt, bis die Stückgüter 6 der drei Reihen 31, 32 und 33 klemmend zwischen der ersten Greiferleiste 12 und der zweiten Greiferleiste 14 gehalten werden und die Stützleisten 20 und 22 hierbei kraftbeaufschlagt an den Stückgütern 6 der zweiten Reihe 32 anliegen.

Die Stützleisten 20 und 22 werden somit über die erste Greiferleiste 12 und die zweite Greiferleiste 14 im Rahmen einer jeweiligen Zustellbewegung gemeinsam mit den Stückgütern 6 der drei parallelen Reihen 31, 32 und 33 zusammengeschoben. Die Stützleisten 20 und 22 werden durch ihre Koppelung an die Greiferleisten 12 und 14 zusammen mit den Greiferleisten 12 und 14 mitbewegt, sofern die Greiferleisten 12 und 14 eine jeweilige Zustellbewegung ausführen.

Die Fig. 2B lässt auch erkennen, dass die Federn 16 und 17 durch die Zustellbewegung jeweils gespannt werden. Somit drücken die Federn 16 und 17 die Stützleisten 20 und 22 kraftbeaufschlagt gegen die Stückgüter 6 der zweiten Reihe 32, wenn die erste Greiferleiste 12 und die zweite Greiferleiste 14 ihre jeweilige Zustellbewegung ausgeführt haben.

Nach der Zustellbewegung können die über den Greifer 1 gehaltenen Stückgüter 6 der drei Reihen 31, 32 und 33 über den Greifer 1 manipuliert und hierbei schräg oder lotrecht zur Transportrichtung TR versetzt und/oder gedreht werden, um die klemmend gehaltenen Stückgüter 6 hierdurch in eine relative Ausrichtung gegenüber weiteren bereits manipulierten Stückgütern 6 zu überführen, die auf eine spätere Palettierung abgestimmt ist.

Nachdem die klemmend gehaltenen Stückgüter 6 manipuliert wurden, kann der Greifer 1 die manipulierten Stückgüter 6 wieder freigeben. Die Greiferleisten 12 und 14 werden hierzu geöffnet, wobei die erste Greiferleiste 12 und die zweite Greiferleiste 14 ihren relativen Abstand zueinander vergrößern. Gleichzeitig entspannen sich die Federn 16 und 17, wodurch die kraftbeaufschlagte Anlage der Stützleisten 20 und 22 an den Stückgütern 6 der zweiten Reihe 32 abnimmt.

Haben die Federn 16 und 17 ihre Ruhelage erreicht, so kann der Greifer 1 angehoben und in Richtung weiterer klemmend entgegenzunehmender Stückgüter 6 bewegt werden, wonach der Greifer 1 abgesenkt und in eine Ausrichtung nach Fig. 2A gebracht wird.

Alternativ hierzu kann es auch sein, dass der Greifer 1 entsprechend der vorherigen Beschreibung zu Figuren 1A bis 1C den relativen Abstand der Greiferleisten 12 und 14 zueinander weiter vergrößert, bis die Stützleisten 20 und 22 die Stückgüter 6 der ersten Reihe 31 und der dritten Reihe 33 senkrecht zur Transportrichtung TR schieben, bis sich zwischen den Stückgütern 6 der ersten Reihe 31 und den Stückgütern 6 der zweiten Reihe 32 sowie zwischen den Stückgütern 6 der zweiten Reihe und den Stückgütern 6 der dritten Reihe jeweils ein Spalt S (vgl. Fig. 1C) bildet.

Der Greifer 1 entsprechend der Ausführungsform nach Figuren 2A und 2B ist dazu in der Lage, Stückgüter 6 aus drei parallelen Reihen 31, 32 und 33 klemmend entgegenzunehmen und zu manipulieren. Der Greifer 1 besitzt hierzu einen einfachen Aufbau, so dass keine komplexe Mechanik erforderlich ist. Auch ist der Greifer 1 sehr kompakt ausgebildet und besitzt gegenüber weiteren bereits aus dem Stand der Technik bekannten Greifern aufgrund seines einfachen und kompakten Aufbaus eine geringe Masse.

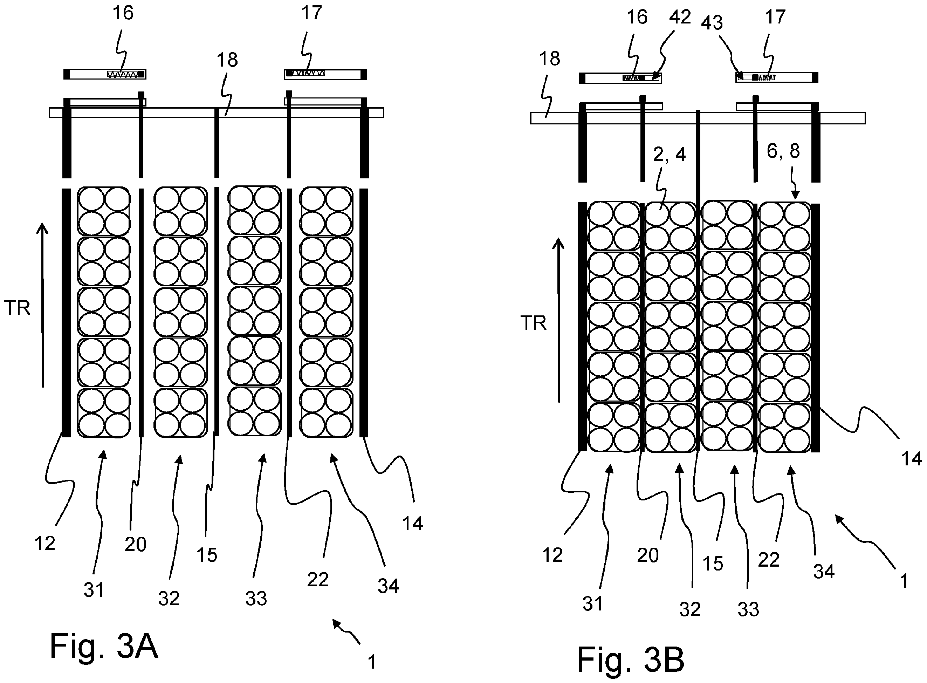

Die schematischen Draufsichten der Figuren 3A und 3B zeigen eine weitere Ausführungsform eines erfindungsgemäßen Greifers 1. Bei der Ausführungsform nach Figuren 3A und 3B transportiert eine nicht mit dargestellte Horizontalfördereinrichtung Stückgüter 6 in vier parallelen Reihen 31, 32, 33 und 34 entlang der Transportrichtung TR.

Auch die Ausführungsform eines Greifers 1 nach Figuren 3A und 3B umfasst eine erste Greiferleiste 12 und eine zweite Greiferleiste 14, die zur klemmenden Entgegennahme von Stückgütern 6 aus den vier parallelen Reihen 31, 32, 33 und 34 eine Zustellbewegung ausführen können. Zwischen der ersten Greiferleiste 12 und der zweiten Greiferleiste 14 sind zwei Stützleisten 20 und 22 positioniert, welche über ein jeweiliges Langloch 42 bzw. 43 in linearer Richtung bewegbar gelagert sind. Die Stützleiste 20 steht weiterhin über eine Feder 16 mit der ersten Greiferleiste 12 in Verbindung, während die Stützleiste 22 über die Feder 17 mit der zweiten Greiferleiste 14 in Verbindung steht.

Bei der Ausführungsform eines Greifers 1 nach Figuren 3A und 3B befindet sich zwischen den Stützleisten 20 und 22 eine Distanzleiste 15. Eine Längserstreckung der Distanzleiste 15 ist parallel zur jeweiligen Längserstreckung der Stützleisten 20 und 22 orientiert. Die Distanzleiste 15 ist fest bzw. ortsfest mit dem Tragrahmen 18 verbunden und kann somit gegenüber dem Tragrahmen 18 nicht bewegt werden.

Sofern die jeweiligen Stückgüter 6 über den Greifer 1 noch nicht entgegengenommen wurden, ist die Distanzleiste 15 in etwa mittig zwischen den Stützleisten 20 und 22 sowie in etwa mittig zwischen der ersten Greiferleiste 12 und der zweiten Greiferleiste 14 positioniert.

Durch eine Zusammenschau der Figuren 3A und 3B wird wiederum die Vorgehensweise des Greifers 1 zur klemmenden Entgegennahme von Stückgütern 6 aus den vier parallelen Reihen 31, 32, 33 und 34 deutlich. Die erste Greiferleiste 12 und die zweite Greiferleiste 14 werden mit identischem Hub aufeinander zubewegt, wobei die erste Greiferleiste 12 und die zweite Greiferleiste 14 hierbei zusätzlich die Stützleisten 20 und 22 in Richtung der Distanzleiste 15 bewegen.

Die Stückgüter 6 der ersten Reihe 31 werden über die erste Greiferleiste 12 im Rahmen einer jeweiligen Zustellbewegung in Richtung der Distanzleiste 15 geschoben. Zudem schiebt die Stützleiste 20, welche über die Feder 16 mit der ersten Greiferleiste 12 in Verbindung steht, die Stückgüter 6 der zweiten Reihe 32 in Richtung der Distanzleiste 15, bis die Stückgüter 6 der zweiten Reihe 32 an der Distanzleiste 15 anschlagen. Die Stückgüter 6 der vierten Reihe 34 werden über die zweite Greiferleiste 14 im Rahmen einer jeweiligen Zustellbewegung in Richtung der Distanzleiste 15 geschoben. Zudem schiebt die Stützleiste 22, welche mit der zweiten Greiferleiste 14 in Verbindung steht, die Stückgüter 6 der dritten Reihe 33 in Richtung der Distanzleiste 15, bis die Stückgüter 6 der dritten Reihe 33 an der Distanzleiste 15 anschlagen.

Die Fig. 3B lässt zudem erkennen, dass die Federn 16 und 17, über welche die Stützleisten 20 und 22 mit den Greiferleisten 12 und 14 in Verbindung stehen, während einer Zustellbewegung gespannt werden. Sofern die Stückgüter 6 der vier parallelen Reihen klemmend zwischen der ersten Greiferleiste 12 und der zweiten Greiferleiste 14 gehalten werden, sind die Federn 16 und 17 gespannt und drücken die Stückgüter 6 der zweiten Reihe 32 sowie die Stückgüter 6 der dritten Reihe 33 kraftbeaufschlagt gegen die ortsfest am Tragrahmen 18 angeordnete Distanzleiste 15.

Die klemmend zwischen der ersten Greiferleiste 12 und 14 gehaltenen Stückgüter 6 können sodann auch über die Ausführungsform eines Greifers 1 nach Figuren 3A und 3B manipuliert und hierbei schräg oder lotrecht zur Transportrichtung TR versetzt sowie ggf. bedarfsweise gegenüber weiteren bereits manipulierten Stückgütern 6 gedreht werden, sofern dies für eine spätere Palettierung erforderlich sein sollte.

Sofern die klemmende Verbindung zwischen dem Greifer 1 und den Stückgütern 6 aufgehoben werden soll, wird der relative Abstand der ersten Greiferleiste 12 und der zweiten Greiferleiste 14 zueinander vergrößert, wozu die erste Greiferleiste 12 und die zweite Greiferleiste 14 jeweils eine Rückhubbewegung in Gegenrichtung der Distanzleiste 15 ausführen. Hierdurch entspannen sich die Federn 16 und 17, so dass hierdurch die kraftbeaufschlagte Anlage der Stützleisten 20 und 22 an den Stückgütern 6 der zweiten Reihe 32 und der dritten Reihe 33 jeweils aufgehoben werden kann.

Da die Stützleisten 20 und 22 jeweils in Längsrichtung im jeweiligen Langloch 42 bzw. 43 bewegbar gelagert sind, verbleiben die Stützleisten 20 und 22 zunächst in Anlage mit den Stückgütern 6 der zweiten Reihe 32 und der dritten Reihe 33, wohingegen die erste Klemmleiste 12 und die zweite Klemmleiste 14 bei einer Vergrößerung ihres relativen Abstandes zueinander ihren bis dahin ausgebildeten Oberflächenkontakt zu den Stückgütern 6 der ersten Reihe 31 und den Stückgütern 6 der vierten Reihe 34 bereits verlieren.

Der Abstand der ersten Greiferleiste 12 gegenüber der zweiten Greiferleiste 14 wird vergrößert, bis sich die Federn 16 und 17 in einer Ruhelage befinden, in welcher sie nicht mehr gespannt sind. Sodann kann der Greifer 1 in vertikaler Richtung angehoben werden, wobei der Greifer 1 die manipulierten Stückgüter 6 verlässt.

Alternativ hierzu besteht gemäß den vorherig bereits beschriebenen Ausführungsbeispielen auch die Möglichkeit, dass die erste Greiferleiste 12 und die zweite Greiferleiste 14 ihren relativen Abstand vergrößern, bis die Stützleisten 20 und 22 die Stückgüter 6 der ersten Reihe 31 von den Stückgütern 6 der zweiten Reihe sowie die Stückgüter der vierten Reihe 34 von den Stückgütern 6 der dritten Reihe senkrecht zur Transportrichtung TR wegschieben. Hierdurch kann zwischen den Stückgütern 6 der ersten Reihe 31 und den Stückgütern 6 der zweiten Reihe 32 sowie zwischen den Stückgütern 6 der dritten Reihe 33 und den Stückgütern 6 der vierten Reihe 34 jeweils ein Spalt S gebildet werden, wie dies in Fig. 1C bereits gezeigt ist. Die Langlöcher 42 und 43 bilden hierbei jeweils einen Anschlag bzw. eine Endlage aus, welche die jeweilige Relativbewegung der Stützleisten 20 und 22 gegenüber der jeweiligen Greiferleiste 12 bzw. 14 begrenzt.

Die Fig. 4 zeigt im Flussdiagramm Schritt, wie bei einer Ausführungsform eines erfindungsgemäßen Verfahrens 100 vorgesehen sein können.

Im ersten Schritt 110 werden Stückgüter 6 nebeneinander in mehreren parallelen Reihen auf einer Horizontalfördereinrichtung bewegt. Bei den Stückgütern 6 handelt es sich um Gebinde 8, welche jeweils mehrere als Getränkebehälter 4 ausgebildete Artikel 2 umfassen.

Im sich daran anschließenden zweiten Schritt 120 führt ein Greifer 1 eine Zustellbewegung aus, bei welcher eine erste Greiferleiste 12 und eine zweite Greiferleiste 14 sich aufeinander zubewegen und hierbei Stückgüter 6 der mehreren parallelen Reihen zusammenschieben. Zwischen der ersten Greiferleiste 12 und der zweiten Greiferleiste 14 befinden sich Stützleisten 20 und 22, welche mit den Stückgütern 6 der mehreren parallelen Reihen zusammengeschoben werden, bis die Stützleisten 20 und 22 kraftbeaufschlagt an Stückgütern 6 unterschiedlicher Reihen 31, 32, 33 bzw. 34 anliegen und die Stückgüter 6 der unterschiedlichen Reihen 31, 32, 33 bzw. 34 klemmend zwischen der ersten Greiferleiste 12 und der zweiten Greiferleiste 14 gehalten sind.

Hierauf folgend wird der dritte Schritt 130 durchgeführt, bei welchem der Greifer 1 die zwischen der ersten Greiferleiste 12 und der zweiten Greiferleiste 14 klemmend gehaltenen Stückgüter 6 manipuliert, indem der Greifer 1 die klemmend gehaltenen Stückgüter 6 schräg oder lotrecht zu einer Transportrichtung TR der Horizontalfördereinrichtung versetzt und/oder bedarfsweise dreht, um die klemmend gehaltenen Stückgüter 6 in eine Ausrichtung zu bringen, welche auf eine spätere Palettierung abgestimmt ist.

Im vierten Schritt 140, welcher auf den Schritt 130 folgt, werden die klemmend gehaltenen und manipulierten Stückgüter 6 freigegeben, indem der Greifer 1 die erste Greiferleiste 12 und die zweite Greiferleiste 14 auseinanderbewegt und sich in Richtung nach oben von den Stückgütern 6 wegbewegt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Greifer
- 2: Artikel
- 4: Getränkebehälter
- 5: Umreifung
- 6: Stückgut
- 8: Gebinde
- 12: erste Greiferleiste
- 14: zweite Greiferleiste
- 15: Distanzleiste
- 16: Feder
- 16': Spiralfeder
- 17: Feder
- 17`: Spiralfeder
- 18: Tragrahmen
- 20: Stützleiste, erste Stützleiste
- 22: Stützleiste, zweite Stützleiste
- 31: Erste Reihe
- 32: Zweite Reihe
- 33: Dritte Reihe
- 34: Vierte Reihe
- 42: Langloch
- 43: Langloch
- 100: Verfahren
- 110: erster Schritt, erster Verfahrensschritt
- 120: zweiter Schritt, zweiter Verfahrensschritt
- 130: dritter Schritt, dritter Verfahrensschritt
- 140: vierter Schritt, vierter Verfahrensschritt

- S: Spalt
- TR: Transportrichtung

## Patentansprüche

1. Greifer (1) zum Erfassen von Stückgütern (6), die in mehreren parallelen Reihen (31, 32, 33, 34) bewegt werden, der Greifer (1) aufweisend
mindestens eine erste Greiferleiste (12) und wenigstens eine zweite Greiferleiste (14), wobei die mindestens eine erste Greiferleiste (12) und die wenigstens eine zweite Greiferleiste (14) zum Ausführen einer Zustellbewegung ausgebildet sind, durch welche jeweilige Zustellbewegung Stückgüter (6) aus unterschiedlichen parallelen Reihen (31, 32, 33, 34) klemmend zwischen der mindestens einen ersten Greiferleiste (12) und der wenigstens einen zweiten Greiferleiste (14) gehalten werden können, der Greifer (1) **gekennzeichnet durch**
mindestens eine Stützleiste (20, 22), welche zwischen der mindestens einen ersten Greiferleiste (12) und der wenigstens einen zweiten Greiferleiste (14) angeordnet ist, wobei die mindestens eine Stützleiste (20, 22) relativ zur mindestens einen ersten Greiferleiste (12) und zur wenigstens einen zweiten Greiferleiste (14) derart bewegbar gelagert ist, dass die mindestens eine Stützleiste (20, 22) im Rahmen einer jeweiligen Zustellbewegung ihre Position zur kraftbeaufschlagten Anlage an Stückgütern (6) aus unterschiedlichen parallelen Reihen (31, 32, 33, 34) bedarfsweise verändern kann und hierzu in linearer Richtung zwischen der mindestens einen ersten Greiferleiste und der wenigstens einen zweiten Greiferleiste bewegbar ist.

2. Greifer nach Anspruch 1, bei welchem
- eine Stützleiste (20) oder mehrere Stützleisten (20) über mindestens eine Feder (16) mit der mindestens einen ersten Greiferleiste (12) derart in Verbindung stehen, dass die mindestens eine Feder (16) zusammengedrückt und gespannt wird, sofern die eine Stützleiste (20) oder die mehreren Stützleisten (20) im Rahmen einer jeweiligen Zustellbewegung ihre Position zur kraftbeaufschlagten Anlage an Stückgütern (6) aus unterschiedlichen parallelen Reihen verändert und sich hierbei der mindestens einen ersten Greiferleiste (12) annähert und/oder bei welchem Greifer
- eine Stützleiste (22) oder mehrere Stützleisten (22) über mindestens eine Feder (17) mit der wenigstens einen zweiten Greiferleiste (14) derart in Verbindung stehen, dass die mindestens eine Feder (17) zusammengedrückt und gespannt wird, sofern die eine Stützleiste (22) oder die mehreren Stützleisten (22) im Rahmen einer jeweiligen Zustellbewegung ihre Position zur kraftbeaufschlagten Anlage an Stückgütern (6) aus unterschiedlichen parallelen Reihen verändert und sich hierbei der wenigstens einen zweiten Greiferleiste (14) annähert.

3. Greifer nach Anspruch 2, bei welchem die mindestens eine Feder (16, 17) durch mindestens eine Spiralfeder (16', 17`) ausgebildet ist.

4. Greifer nach einem der Ansprüche 1 bis 3, mit einem Tragrahmen (18), an welchem
- eine erste Stützleiste (20) und eine zweite Stützleiste (22) angeordnet sind, welche sich jeweils zwischen der mindestens einen ersten Greiferleiste (12) und der wenigstens einen zweiten Greiferleiste (14) befinden, wobei die erste Stützleiste (20) und die zweite Stützleiste (22) jeweils relativ zur mindestens einen ersten Greiferleiste (12) und zur wenigstens einen zweiten Greiferleiste (14) derart bewegbar am Tragrahmen (18) gelagert sind, dass die erste Stützleiste (20) und die zweite Stützleiste (22) im Rahmen einer jeweiligen Zustellbewegung ihre Position zur jeweiligen kraftbeaufschlagten Anlage an Stückgütern (6) aus unterschiedlichen parallelen Reihen jeweils bedarfsweise verändern können und welcher Greifer
- mindestens eine Distanzleiste (15) umfasst, welche mindestens eine Distanzleiste (15) sich zwischen der ersten Stützleiste (20) und der zweiten Stützleiste (22) befindet und ortsfest am Tragrahmen (18) angeordnet ist.

5. Greifer nach einem der Ansprüche 1 bis 4, welcher Greifer mindestens ein Langloch (42, 43) ausbildet, über welches mindestens eine Langloch (42, 43) die mindestens eine Stützleiste (20, 22) in linearer Richtung bewegbar gelagert ist.

6. Portalsystem mit
- mindestens einem Greifer (1) nach einem der Ansprüche 1 bis 5,
- wenigstens einer Horizontalfördereinrichtung zur Bewegung von Stückgütern (6) in mehreren parallelen Reihen (31, 32, 33, 34) sowie
- einer Steuer- und/oder Regeleinrichtung, wobei
der mindestens eine Greifer (1) über die Steuer- und/oder Regeleinrichtung derart ansteuerbar ist, dass die über die wenigstens eine Horizontalfördereinrichtung in mehreren parallelen Reihen (31, 32, 33, 34) bewegten Stückgüter (6) durch ein bedarfsweises Drehen und/oder Versetzen in eine relative Ausrichtung zueinander überführbar sind, welche auf eine aus mehreren Stückgütern (6) zu bildende palettierfähige Lage abgestimmt ist.

7. Verfahren (100) zum Umgang mit Stückgütern (6), bei welchem Verfahren (100)
- wenigstens eine Horizontalfördereinrichtung Stückgüter (6) in mehreren parallelen Reihen (31, 32, 33, 34) bewegt und
- mindestens ein Greifer (1) über mindestens eine erste Greiferleiste (12) und wenigstens eine zweite Greiferleiste (14) Stückgüter (6) aus den mehreren parallelen Reihen (31, 32, 33, 34) zusammenschiebt, bis die Stückgüter (6) aus den mehreren parallelen Reihen (31, 32, 33, 34) klemmend zwischen der mindestens einen ersten Greiferleiste (12) und der wenigstens einen zweiten Greiferleiste (14) gehalten werden, das Verfahren (100) **dadurch gekennzeichnet, dass**
- der mindestens eine Greifer (1) mindestens eine Stützleiste (20, 22) besitzt, die sich zwischen der mindestens einen ersten Greiferleiste (12) und der wenigstens einen zweiten Greiferleiste (14) befindet, welche mindestens eine Stützleiste (20, 22) durch ihre bewegbare Lagerung gemeinsam mit den jeweiligen Stückgütern (6) aus den mehreren parallelen Reihen (31, 32, 33, 34) zusammengeschoben wird, bis die mindestens eine Stützleiste (20, 22) hierbei jeweils kraftbeaufschlagt mit Stückgütern (6) aus unterschiedlichen parallelen Reihen (31, 32, 33, 34) in Anlage gelangt und die Stückgüter (6) aus den unterschiedlichen parallelen Reihen (31, 32, 33, 34) unter kraftbeaufschlager Anlage an der mindestens einen Stützleiste (20, 22) klemmend zwischen der mindestens einen ersten Greiferleiste (12) und der wenigstens einen zweiten Greiferleiste (14) gehalten werden.

8. Verfahren nach Anspruch 7, bei welchem
- eine Stützleiste (20) oder mehrere Stützleisten (20) über mindestens eine Feder (16) mit der mindestens einen ersten Greiferleiste (12) in Verbindung stehen, wobei die mindestens eine Feder (16) während des Zusammenschiebens ab einem Kontakt der einen Stützleiste (20) oder der mehreren Stützleisten (20) zu Stückgütern (6) einer Reihe (31, 32, 33, 34) gespannt wird, wodurch die eine Stützleiste (20) oder die mehreren Stützleisten (20) über die Federkraft der sodann gespannten Feder (16) kraftbeaufschlagt mit den Stückgütern (6) dieser Reihe (31, 32, 33, 34) in Anlage steht und/oder bei welchem Verfahren
- eine Stützleiste (22) oder mehrere Stützleisten (22) über mindestens eine Feder (17) mit der wenigstens einen zweiten Greiferleiste (14) in Verbindung stehen, wobei die mindestens eine Feder (17) während des Zusammenschiebens ab einem Kontakt der einen Stützleiste (22) oder der mehreren Stützleisten (22) zu Stückgütern (6) einer Reihe (31, 32, 33, 34) gespannt wird, wodurch die eine Stützleiste (22) oder die mehreren Stützleisten (22) über die Federkraft der sodann gespannten Feder (17) kraftbeaufschlagt mit den Stückgütern (6) dieser Reihe (31, 32, 33, 34) in Anlage steht.

9. Verfahren nach Anspruch 8, wobei es sich bei der mindestens einen Feder (16, 17) um mindestens eine Spiralfeder (16', 17`) handelt.

10. Verfahren nach Anspruch 8 oder Anspruch 9, bei welchem die klemmend zwischen der mindestens einen ersten Greiferleiste (12) und der wenigstens einen zweiten Greiferleiste (14) gehaltenen Stückgüter (6) gegenüber weiteren auf der wenigstens einen Horizontalfördereinrichtung angeordneten Stückgütern (6) gedreht und/oder versetzt und hierauf freigegeben werden, woraufhin die wenigstens eine Horizontalfördereinrichtung die freigegebenen Stückgüter (6) fortbewegt und wobei
- im Verlauf einer Freigabe von Stückgütern (6) die eine Stützleiste (20) oder die mehreren Stützleisten (20), welche über die mindestens eine Feder (16) mit der mindestens einen ersten Greiferleiste (12) in Verbindung steht, mittels der Federkraft der bis dahin gespannten mindestens einen Feder (16) in eine Ausgangslage zurückbewegt werden und/oder bei welchem Verfahren
- im Verlauf einer Freigabe von Stückgütern (6) die eine Stützleiste (22) oder die mehreren Stützleisten (22), welche über die mindestens eine Feder (17) mit der wenigstens einen zweiten Greiferleiste (14) in Verbindung steht, mittels der Federkraft der bis dahin gespannten mindestens einen Feder (17) in eine Ausgangslage zurückbewegt werden.

11. Verfahren nach einem der Ansprüche 7 bis 10, bei welchem
der mindestens eine Greifer (1) eine erste Stützleiste (20) und eine zweite Stützleiste (22) besitzt, die sich jeweils zwischen der mindestens einen ersten Greiferleiste (12) und der wenigstens einen zweiten Greiferleiste (14) befinden und jeweils an einem Tragrahmen (18) des mindestens einen Greifers (1) angeordnet sind, wobei die erste Stützleiste (20) und die zweite Stützleiste (22) durch eine jeweilige bewegbare Lagerung am Tragrahmen (18) gemeinsam mit den jeweiligen Stückgütern (6) aus den mehreren unterschiedlichen parallelen Reihen (31, 32, 33, 34) zusammengeschoben werden, bis die erste Stützleiste (20) und die zweite Stützleiste (22) hierbei jeweils kraftbeaufschlagt mit Stückgütern (6) aus unterschiedlichen parallelen Reihen (31, 32, 33, 34) in Anlage gelangen und die Stückgüter (6) aus den unterschiedlichen parallelen Reihen (31, 32, 33, 34) unter kraftbeaufschlager Anlage an der ersten Stützleiste (20) und der zweiten Stützleiste (22) klemmend zwischen der mindestens einen ersten Greiferleiste (12) und der wenigstens einen zweiten Greiferleiste (14) gehalten werden und bei welchem Verfahren
wenigstens eine Distanzleiste (15) vorgesehen ist, die sich zwischen der ersten Stützleiste (20) und der zweiten Stützleiste (22) befindet und ortsfest am Tragrahmen (18) gelagert ist, wobei Stückgüter (6) aus unterschiedlichen parallelen Reihen (31, 32, 33, 34) während des jeweiligen Zusammenschiebens kraftbeaufschlagt mit der wenigstens einen Distanzleiste (15) in Anlage gelangen und die Stückgüter (6) aus den unterschiedlichen parallelen Reihen (31, 32, 33, 34) unter kraftbeaufschlagter Anlage an der wenigstens einen Distanzleiste (15) klemmend zwischen der mindestens einen ersten Greiferleiste (12) und der wenigstens einen zweiten Greiferleiste (14) gehalten werden.

12. Verfahren nach einem der Ansprüche 7 bis 11, bei welchem der mindestens eine Greifer (1) über ein Portalsystem geführt wird, wobei der mindestens eine Greifer (1) die Stückgüter (6) aus den mehreren parallelen Reihen (31, 32, 33, 34), welche der mindestens eine Greifer (1) unter kraftbeaufschlagter Anlage an der mindestens einen Stützleiste (20, 22) klemmend zwischen der mindestens einen ersten Greiferleiste (12) und der wenigstens einen zweiten Greiferleiste (14) hält, durch Drehen und/oder Versetzen in eine relative Ausrichtung gegenüber weiteren Stückgütern (6) bringt, welche relative Ausrichtung auf eine aus mehreren Stückgütern (6) zu bildende palettierfähige Lage abgestimmt ist.

13. Verfahren nach einem der Ansprüche 7 bis 12, bei welchem der mindestens eine Greifer die Stückgüter (6) aus den unterschiedlichen parallelen Reihen (31, 32, 33, 34) manipuliert und hierzu insbesondere versetzt und/oder dreht, während die Stückgüter (6) aus den unterschiedlichen parallelen Reihen (31, 32, 33, 34) klemmend zwischen der mindestens einen ersten Greiferleiste (12) und der wenigstens einen zweiten Greiferleiste (14) gehalten werden und bei welchem Verfahren hierauf die bis dahin klemmend gehaltenen Stückgüter (6) freigegeben werden, wozu die mindestens eine erste Greiferleiste (12) und die wenigstens eine zweite Greiferleiste (14) auseinanderbewegt werden und wobei die mindestens eine Stützleiste (20, 22) bereits manipulierte Stückgüter (6) auseinanderschiebt, so dass zwischen bereits manipulierten Stückgütern (6) hierdurch ein Spalt (S) gebildet wird.

## Claims

1. A gripper (1) for seizing piece goods (6) being moved in a plurality of parallel rows (31, 32, 33, 34), the gripper (1) comprising
at least one first gripper bar (12) and at least one second gripper bar (14), wherein the at least one first gripper bar (12) and the at least one second gripper bar (14) are designed to perform an advance movement, by which particular advance movement piece goods (6) from different parallel rows (31, 32, 33, 34) can be held in a clamping manner between the at least one first gripper bar (12) and the at least one second gripper bar (14), the gripper (1) being **characterised by**
at least one support bar (20, 22), which is arranged between the at least one first gripper bar (12) and the at least one second gripper bar (14), wherein the at least one support bar (20, 22) is mounted to be movable relative to the at least one first gripper bar (12) and to the at least one second gripper bar (14) in such a manner that the at least one support bar (20, 22) can change its position as required in the context of a particular advance movement in order to come into contact in a force-loaded manner with piece goods (6) from different parallel rows (31, 32, 33, 34), and, for this purpose, the at least one support bar (20, 22) is movable in a linear direction between the at least one first gripper bar and the at least one second gripper bar.

2. The gripper according to claim 1, in which
- one support bar (20) or a plurality of support bars (20) are connected to the at least one first gripper bar (12) via at least one spring (16) in such a manner that the at least one spring (16) is compressed and loaded if the one support bar (20) or the plurality of support bars (20) change their position in the context of a particular advance movement in order to come into contact in a force-loaded manner with piece goods (6) from different parallel rows, and the at least one support bar (20) or the plurality of support bars (20) approach the at least one first gripper bar (12) in the process and/or in which gripper
- one support bar (22) or a plurality of support bars (22) are connected to the at least one second gripper bar (14) via at least one spring (17) in such a manner that the at least one spring (17) is compressed and loaded if the one support bar (22) or the plurality of support bars (22) change their position in the context of a particular advance movement in order to come into contact in a force-loaded manner with piece goods (6) from different parallel rows, and the at least one support bar (22) or the plurality of support bars (22) approach the at least one second gripper bar (14) in the process.

3. The gripper according to claim 2, in which the at least one spring (16, 17) is formed by at least one spiral spring or coil spring (16', 17').

4. The gripper according to one of the claims 1 to 3, with a carrier frame (18) on which
- a first support bar (20) and a second support bar (22) are arranged, which are each situated between the at least one first gripper bar (12) and the at least one second gripper bar (14), wherein the first support bar (20) and the second support bar (22) are each mounted on the carrier frame (18) to be movable relative to the at least one first gripper bar (12) and to the at least one second gripper bar (14) in such a manner that the first support bar (20) and the second support bar (22) can each change their position as required in the context of a particular advance movement in order to come into contact in a force-loaded manner with piece goods (6) from different parallel rows, and which gripper
- comprises at least one spacer bar (15), which at least one spacer bar (15) is situated between the first support bar (20) and the second support bar (22) and is arranged in a stationary manner on the carrier frame (18).

5. The gripper according to one of the claims 1 to 4, which gripper forms at least one long slot (42, 43), via which at least one long slot (42, 43) the at least one support bar (20, 22) is mounted to be movable in a linear direction.

6. A gantry system with
- at least one gripper (1) according to one of the claims 1 to 5,
- at least one horizontal conveyor for moving piece goods (6) in a plurality of parallel rows (31, 32, 33, 34), and
- a control device and/or regulating device, wherein
the at least one gripper (1) is controllable via the control device and/or regulating device in such a manner that the piece goods (6) being moved in a plurality of parallel rows (31, 32, 33, 34) via the at least one horizontal conveyor are transferable, as required, by rotation and/or relocation into an alignment relative to one another, which alignment is adapted to a palletisable layer to be formed from a plurality of piece goods (6).

7. A method (100) for handling piece goods (6), in which method (100)
- at least one horizontal conveyor moves piece goods (6) in a plurality of parallel rows (31, 32, 33, 34), and
- at least one gripper (1) pushes together piece goods (6) from the plurality of parallel rows (31, 32, 33, 34) via at least one first gripper bar (12) and at least one second gripper bar (14) until the piece goods (6) from the plurality of parallel rows (31, 32, 33, 34) are held in a clamping manner between the at least one first gripper bar (12) and the at least one second gripper bar (14), the method (100) being **characterised in that**
- the at least one gripper (1) has at least one support bar (20, 22) situated between the at least one first gripper bar (12) and the at least one second gripper bar (14), the support bars (20, 22) being pushed together along with the particular piece goods (6) from the plurality of parallel rows (31, 32, 33, 34), which is made possible by the movable bearings of the support bars (20, 22), until they come into contact in the process, in each case in a force-loaded manner, with piece goods (6) from different parallel rows (31, 32, 33, 34), and until the piece goods (6) from the different parallel rows (31, 32, 33, 34) are held in force-loaded contact to the at least one support bar (20, 22) in a clamping manner between the at least one first gripper bar (12) and the at least one second gripper bar (14).

8. The method according to claim 7, in which
- one support bar (20) or a plurality of support bars (20) are connected to the at least one first gripper bar (12) via at least one spring (16), wherein the at least one spring (16) is loaded from the point when the one support bar (20) or the plurality of support bars (20) come into contact with piece goods (6) of a row (31, 32, 33, 34) in the process of being pushed together, whereby the one support bar (20) or the plurality of support bars (20) are in contact in a force-loaded manner with the piece goods (6) of this row (31, 32, 33, 34) via the spring force of the then loaded spring (16), and/or in which method
- one support bar (22) or a plurality of support bars (22) are connected to the at least one second gripper bar (14) via at least one spring (17), wherein the at least one spring (17) is loaded from the point when the one support bar (22) or the plurality of support bars (22) come into contact with piece goods (6) of a row (31, 32, 33, 34) in the process of being pushed together, whereby the one support bar (22) or the plurality of support bars (22) are in contact in a force-loaded manner with the piece goods (6) of this row (31, 32, 33, 34) via the spring force of the then loaded spring (17).

9. The method according to claim 8, wherein the at least one spring (16, 17) is at least one spiral spring or coil spring (16', 17').

10. The method according to claim 8 or claim 9, in which the piece goods (6) being held in a clamping manner between the at least one first gripper bar (12) and the at least one second gripper bar (14) are rotated and/or relocated relative to other piece goods (6) arranged on the at least one horizontal conveyor and are hereupon released, whereupon the at least one horizontal conveyor moves the released piece goods (6) along, and wherein,
- in the course of a release of piece goods (6), the one support bar (20) or the plurality of support bars (20), which are connected to the at least one first gripper bar (12) via the at least one spring (16), are returned to a starting position by means of the spring force of the at least one spring (16) that was up to that point loaded, and/or in which method,
- in the course of a release of piece goods (6), the one support bar (22) or the plurality of support bars (22), which are connected to the at least one second gripper bar (14) via the at least one spring (17), are returned to a starting position by means of the spring force of the at least one spring (17) that was up to that point loaded.

11. The method according to one of the claims 7 to 10, in which
the at least one gripper (1) has a first support bar (20) and a second support bar (22), which are each situated between the at least one first gripper bar (12) and the at least one second gripper bar (14) and are each arranged on a carrier frame (18) of the at least one gripper (1), wherein the first support bar (20) and the second support bar (22) are pushed together along with the particular piece goods (6) from the plurality of parallel rows (31, 32, 33, 34), which is made possible by a particular movable bearing on the carrier frame (18), until the first support bar (20) and the second support bar (22) come into contact in the process, in each case in a force-loaded manner, with piece goods (6) from different parallel rows (31, 32, 33, 34), and until the piece goods (6) from the different parallel rows (31, 32, 33, 34) are held in a force-loaded contact to the first support bar (20) and to the second support bar (22) in a clamping manner between the at least one first gripper bar (12) and the at least one second gripper bar (14), and in which method
at least one spacer bar (15) is provided, which is situated between the first support bar (20) and the second support bar (22) and is mounted in a stationary manner on the carrier frame (18), wherein piece goods (6) from different parallel rows (31, 32, 33, 34) come into contact in a force-loaded manner with the at least one spacer bar (15) during the particular process of being pushed together, and the piece goods (6) from the different parallel rows (31, 32, 33, 34) are held under force-loaded contact to the at least one spacer bar (15) in a clamping manner between the at least one first gripper bar (12) and the at least one second gripper bar (14).

12. The method according to one of the claims 7 to 11, in which the at least one gripper (1) is guided via a gantry system, wherein the at least one gripper (1) brings the piece goods (6) from the plurality of parallel rows (31, 32, 33, 34), which the at least one gripper (1) holds under force-loaded contact to the at least one support bar (20, 22) in a clamping manner between the at least one first gripper bar (12) and the at least one second gripper bar (14), by way of rotation and/or relocation into an alignment relative to other piece goods (6), which relative alignment is adapted to a palletisable layer to be formed from a plurality of piece goods (6).

13. The method according to one of the claims 7 to 12, in which the at least one gripper manipulates the piece goods (6) from the different parallel rows (31, 32, 33, 34) and, in particular, relocates and/or rotates them for this purpose, while the piece goods (6) from the different parallel rows (31, 32, 33, 34) are being held in a clamping manner between the at least one first gripper bar (12) and the at least one second gripper bar (14), and in which method the piece goods (6) being held in a clamping manner up to that point are hereupon released, for which purpose the at least one first gripper bar (12) and the at least one second gripper bar (14) are moved apart, and wherein the at least one support bar (20, 22) pushes apart piece goods (6) that have already been manipulated such that a gap (S) is hereby formed between already manipulated piece goods (6).

## Revendications

1. Préhenseur (1) destiné à saisir des produits de détail (6) qui sont déplacées en plusieurs rangées parallèles (31, 32, 33, 34), ledit préhenseur (1) présentant
au moins une première barre de préhenseur (12) et au moins une deuxième barre de préhenseur (14), dans lequel ladite au moins une première barre de préhenseur (12) et ladite au moins une deuxième barre de préhenseur (14) sont conçues pour effectuer un mouvement d'avance, ledit mouvement d'avance respectif permet de maintenir par serrage des produits de détail (6) provenant de différentes rangées parallèles (31, 32, 33, 34), entre ladite au moins une première barre de préhenseur (12) et ladite au moins une deuxième barre de préhenseur (14), ledit préhenseur (1) étant **caractérisé par**
au moins une barre de support (20, 22) qui est disposée entre ladite au moins une première barre de préhenseur (12) et ladite au moins une deuxième barre de préhenseur (14), dans lequel ladite au moins une barre de support (20, 22) est montée de manière déplaçable par rapport à ladite au moins une première barre de préhenseur (12) et à ladite au moins une deuxième barre de préhenseur (14) de telle sorte que, dans le cadre d'un mouvement d'avance respectif, ladite au moins une barre de support (20, 22) peut changer de position, en cas de besoin, pour un appui appliqué par force sur des produits de détail (6) provenant de différentes rangées parallèles (31, 32, 33, 34) et peut être déplacée à cette fin dans la direction linéaire entre ladite au moins une première barre de préhenseur et ladite au moins une deuxième barre de préhenseur.

2. Préhenseur selon la revendication 1, dans lequel
- une barre de support (20) ou plusieurs barres de support (20) sont reliées à ladite au moins une première barre de préhenseur (12) par l'intermédiaire d'au moins un ressort (16) de telle sorte que ledit au moins un ressort (16) est comprimé et tendu, dans la mesure où ladite une barre de support (20) ou lesdites plusieurs barres de support (20) change(nt) de position pour un appui appliqué par force sur des produits de détail (6) provenant de différentes rangées parallèles (31, 32, 33, 34), dans le cadre d'un mouvement d'avance respectif, et se rapproche(nt) ainsi de ladite au moins une première barre de préhenseur (12), et/ou dans lequel préhenseur
- une barre de support (22) ou plusieurs barres de support (22) sont reliées à ladite au moins une deuxième barre de préhenseur (14) par l'intermédiaire d'au moins un ressort (17) de telle sorte que ledit au moins un ressort (17) est comprimé et tendu, dans la mesure où ladite une barre de support (22) ou lesdites plusieurs barres de support (22) change(nt) de position pour un appui appliqué par force sur des produits de détail (6) provenant de différentes rangées parallèles (31, 32, 33, 34), dans le cadre d'un mouvement d'avance respectif, et se rapproche(nt) ainsi de ladite au moins une deuxième barre de préhenseur (14).

3. Préhenseur selon la revendication 2, dans lequel ledit au moins un ressort (16, 17) est formé par au moins un ressort spiral (16', 17').

4. Préhenseur selon l'une quelconque des revendications 1 à 3, comprenant un cadre porteur (18) sur lequel
- sont disposées une première barre de support (20) et une deuxième barre de support (22) qui se trouvent chacune entre ladite au moins une première barre de préhenseur (12) et ladite au moins une deuxième barre de préhenseur (14), dans lequel la première barre de support (20) et la deuxième barre de support (22) sont montées sur le cadre porteur (18) de manière à pouvoir se déplacer par rapport à ladite au moins une première barre de préhenseur (12) et à ladite au moins une deuxième barre de préhenseur (14) de telle sorte que, dans le cadre d'un mouvement d'avance respectif, la première barre de support (20) et la deuxième barre de support (22) peuvent changer de position, respectivement en cas de besoin, pour un appui respectif appliqué par force sur des produits de détail (6) provenant de différentes rangées parallèles (31, 32, 33, 34), et lequel préhenseur
- comprend au moins une barre d'écartement (15), laquelle au moins une barre d'écartement (15) se trouve entre la première barre de support (20) et la deuxième barre de support (22) et est disposée à poste fixe sur le cadre porteur (18).

5. Préhenseur selon l'une quelconque des revendications 1 à 4, lequel préhenseur forme au moins un trou oblong (42, 43), c'est par l'intermédiaire duquel au moins un trou oblong (42, 43) que ladite au moins une barre de support (20, 22) est montée de manière à pouvoir se déplacer dans la direction linéaire.

6. Système de portique comprenant
- au moins un préhenseur (1) selon l'une quelconque des revendications 1 à 5,
- au moins un dispositif de transport horizontal destiné à déplacer des produits de détail (6) en plusieurs rangées parallèles (31, 32, 33, 34) ainsi qu'
- un dispositif de commande et/ou de régulation, dans lequel
ledit au moins un préhenseur (1) peut être commandé par le biais dudit dispositif de commande et/ou de régulation de telle sorte que les produits de détail (6) déplacées par l'intermédiaire dudit au moins un dispositif de transport horizontal en plusieurs rangées parallèles (31, 32, 33, 34) peuvent être amenés dans une orientation relative les uns par rapport aux autres en les tournant et/ou décalant en cas de besoin, qui est coordonnée avec une couche palettisable à former à partir de plusieurs produits de détail (6).

7. Procédé (100) de manipulation de produits de détail (6), dans lequel procédé (100)
- au moins un dispositif de transport horizontal déplace des produits de détail (6) en plusieurs rangées parallèles (31, 32, 33, 34) et
- au moins un préhenseur (1) rapproche des produits de détail (6) provenant desdites plusieurs rangées parallèles (31, 32, 33, 34) par l'intermédiaire d'au moins une première barre de préhenseur (12) et au moins une deuxième barre de préhenseur (14) jusqu'à ce que les produits de détail (6) provenant des plusieurs rangées parallèles (31, 32, 33, 34) soient maintenues par serrage entre ladite au moins une première barre de préhenseur (12) et ladite au moins une deuxième barre de préhenseur (14), le procédé (100) étant **caractérisé par le fait que**
- ledit au moins un préhenseur (1) présente au moins une barre de support (20, 22) qui est située entre ladite au moins une première barre de préhenseur (12) et ladite au moins une deuxième barre de préhenseur (14), laquelle au moins une barre de support (20, 22) est poussée, grâce à son montage déplaçable, conjointement avec les produits de détail (6) respectifs provenant des plusieurs rangées parallèles (31, 32, 33, 34) jusqu'à ce que ladite au moins une barre de support (20, 22) vienne ainsi en appui, respectivement par application de force, sur des produits de détail (6) provenant de différentes rangées parallèles (31, 32, 33, 34), et que les produits de détail (6) provenant des différentes rangées parallèles (31, 32, 33, 34) soient maintenus par serrage entre ladite au moins une première barre de préhenseur (12) et ladite au moins une deuxième barre de préhenseur (14) en étant en appui appliqué par force sur ladite au moins une barre de support (20, 22).

8. Procédé selon la revendication 7, dans lequel
- une barre de support (20) ou plusieurs barres de support (20) sont reliées à ladite au moins une première barre de préhenseur (12) par l'intermédiaire d'au moins un ressort (16), dans lequel ledit au moins un ressort (16) est tendu pendant le rapprochement à partir d'un moment où ladite une barre de support (20) ou lesdites plusieurs barres de support (20) entre(nt) en contact avec des produits de détail (6) d'une rangée (31, 32, 33, 34), ce par quoi ladite une barre de support (20) ou lesdites plusieurs barres de support (20) est/sont en appui par application de force, au moyen de la force du ressort (16) qui est alors tendu, sur les produits de détail (6) de cette rangée (31, 32, 33, 34), et/ou dans lequel procédé
- une barre de support (22) ou plusieurs barres de support (22) sont reliées à ladite au moins une deuxième barre de préhenseur (14) par l'intermédiaire d'au moins un ressort (17), dans lequel ledit au moins un ressort (17) est tendu pendant le rapprochement à partir d'un moment où ladite une barre de support (22) ou lesdites plusieurs barres de support (22) entre(nt) en contact avec des produits de détail (6) d'une rangée (31, 32, 33, 34), ce par quoi ladite une barre de support (22) ou lesdites plusieurs barres de support (22) est/sont en appui par application de force, au moyen de la force du ressort (17) qui est alors tendu, sur les produits de détail (6) de cette rangée (31, 32, 33, 34).

9. Procédé selon la revendication 8, dans lequel ledit au moins un ressort (16, 17) est au moins un ressort spiral (16', 17').

10. Procédé selon la revendication 8 ou la revendication 9, dans lequel les produits de détail (6) maintenus par serrage entre ladite au moins une première barre de préhenseur (12) et ladite au moins une deuxième barre de préhenseur (14) sont tournées et/ou décalés par rapport à d'autres produits de détail (6) disposés sur ledit au moins un dispositif de transport horizontal et sont ensuite libérés, ce après quoi ledit au moins un dispositif de transport horizontal déplace les produits de détail (6) libérés, et dans lequel
- au cours d'une libération de produits de détail (6), ladite une barre de support (20) ou lesdites plusieurs barres de support (20) qui est/sont reliée(s) à ladite au moins une première barre de préhenseur (12) par l'intermédiaire dudit au moins un ressort (16), est/sont ramenée(s) à une position de départ au moyen de la force dudit au moins un ressort (16) qui a été tendu jusqu'alors, et/ou dans lequel procédé
- au cours d'une libération de produits de détail (6), ladite une barre de support (22) ou lesdites plusieurs barres de support (22) qui est/sont reliée(s) à ladite au moins une deuxième barre de préhenseur (14) par l'intermédiaire dudit au moins un ressort (17), est/sont ramenée(s) à une position de départ au moyen de la force dudit au moins un ressort (17) qui a été tendu jusqu'alors.

11. Procédé selon l'une quelconque des revendications 7 à 10, dans lequel
ledit au moins un préhenseur (1) présente une première barre de support (20) et une deuxième barre de support (22) qui se trouvent chacune entre ladite au moins une première barre de préhenseur (12) et ladite au moins une deuxième barre de préhenseur (14) et sont disposées chacune sur un cadre porteur (18) dudit au moins un préhenseur (1), dans lequel, grâce à un montage mobile respectif sur ledit cadre porteur (18), la première barre de support (20) et la deuxième barre de support (22) sont poussées conjointement avec les produits de détail (6) respectifs provenant desdites plusieurs différentes rangées parallèles (31, 32, 33, 34) jusqu'à ce que la première barre de support (20) et la deuxième barre de support (22) viennent ainsi en appui, respectivement par application de force, sur des produits de détail (6) provenant de différentes rangées parallèles (31, 32, 33, 34), et que les produits de détail (6) provenant des différentes rangées parallèles (31, 32, 33, 34) soient maintenus par serrage entre ladite au moins une première barre de préhenseur (12) et ladite au moins une deuxième barre de préhenseur (14) en étant en appui appliqué par force sur la première barre de support (20) et la deuxième barre de support (22), et dans lequel procédé
au moins une barre d'écartement (15) est prévue qui est située entre la première barre de support (20) et la deuxième barre de support (22) et est montée à poste fixe sur le cadre porteur (18), dans lequel des produits de détail (6) provenant de différentes rangées parallèles (31, 32, 33, 34) viennent en appui, par application de force, pendant le rapprochement respectif, sur ladite au moins une barre d'écartement (15), et les produits de détail (6) provenant des différentes rangées parallèles (31, 32, 33, 34) sont maintenus par serrage entre ladite au moins une première barre de préhenseur (12) et ladite au moins une deuxième barre de préhenseur (14), en étant en appui appliqué par force sur ladite au moins une barre d'écartement (15).

12. Procédé selon l'une quelconque des revendications 7 à 11, dans lequel ledit au moins un préhenseur (1) est guidé par un système de portique, dans lequel ledit au moins un préhenseur (1) amène les produits de détail (6) provenant des plusieurs rangées parallèles (31, 32, 33, 34) que ledit au moins un préhenseur (1) maintient par serrage entre ladite au moins une première barre de préhenseur (12) et ladite au moins une deuxième barre de préhenseur (14), pendant qu'ils sont en appui appliqué par force sur ladite au moins une barre de support (20, 22), dans une orientation relative par rapport à d'autres produits de détail (6), en les tournant et/ou décalant, laquelle orientation relative est coordonnée avec une couche palettisable à former à partir de plusieurs produits de détail (6).

13. Procédé selon l'une quelconque des revendications 7 à 12, dans lequel ledit au moins un préhenseur manipule les produits de détail (6) provenant des différentes rangées parallèles (31, 32, 33, 34) et, en particulier, les décale et/ou les tourne à cette fin, tandis que les produits de détail (6) provenant des différentes rangées parallèles (31, 32, 33, 34) sont maintenues par serrage entre ladite au moins une première barre de préhenseur (12) et ladite au moins une deuxième barre de préhenseur (14), et dans lequel procédé les produits de détail (6) qui ont été maintenus par serrage jusqu'alors sont ensuite libérés, à cet effet ladite au moins une première barre de préhenseur (12) et ladite au moins une deuxième barre de préhenseur (14) sont écartées l'une de l'autre, et dans lequel ladite au moins une barre de support (20, 22) écarte des produits de détail (6) déjà manipulés de sorte que, ainsi, un espace (S) est formé entre des produits de détail (6) déjà manipulés.
